(19) Europäisches Patentamt
European Patent Office
Office européen des brevets

(11) Veröffentlichungsnummer: **0 122 458**
**B1**

(12) **EUROPÄISCHE PATENTSCHRIFT**

(45) Veröffentlichungstag der Patentschrift: **04.01.89**

(21) Anmeldenummer: **84102731.1**

(22) Anmeldetag: **13.03.84**

(51) Int. Cl.⁴: **C 09 B 43/00**, C 09 B 44/00, C 09 B 39/00, C 09 B 62/00 // C09B29/30, C09B31/08, D06P1/02, D21H1/46

# (54) Azoverbindungen.

(30) Priorität: **16.03.83 CH 1438/83**
**08.08.83 CH 4299/83**

(43) Veröffentlichungstag der Anmeldung: **24.10.84 Patentblatt 84/43**

(45) Bekanntmachung des Hinweises auf die Patenterteilung: **04.01.89 Patentblatt 89/1**

(84) Benannte Vertragsstaaten: **CH DE FR GB IT LI**

(56) Entgegenhaltungen:
**EP-A-0 051 041**
**EP-A-0 059 355**
**EP-A-0 062 824**
**EP-A-0 062 825**
**EP-A-0 065 595**
**EP-A-0 098 430**
**DE-A-3 114 088**
**FR-A-1 263 438**
**FR-A-1 345 814**
**FR-A-1 364 178**
**FR-A-1 365 386**
**FR-A-1 365 389**
**FR-A-1 465 831**
**FR-A-2 424 305**
**FR-A-2 512 041**
**FR-A-2 525 620**
**GB-A-995 502**

(73) Patentinhaber: **CIBA- GEIGY AG, Klybeckstrasse 141, CH- 4002 Basel (CH)**

(72) Erfinder: **Adam, Jean- Marie, Dr., Rue de Village Neuf 60 D, F-68300 Rosenau (FR)**
Erfinder: **Schwander, Hansrudolf, Dr., Unterm Schellenberg 189, CH- 4125 Riehen (CH)**

(74) Vertreter: **Zumstein, Fritz jun., Dr., Dr. F. Zumstein sen. Dr. E. Assmann Dr. R. Koenigsberger Dipl.- Ing. F. Klingseisen Dr. F. Zumstein jun. Bräuhausstrasse 4, D-8000 München 2 (DE)**

(56) Entgegenhaltungen: (Fortsetzung)

**CHEMICAL ABSTRACTS, Band 84, Nr. 22, 31. Mai 1976, Seite 95, Nr. 152226a, Columbus, Ohio, USA; & JP - A - 75 161 522 (SUMITOMO CHEMICAL CO., LTD.) 27.12.1975**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 122 458 B1**

LIBER, STOCKHOLM 1989

**Beschreibung**

Die Erfindung betrifft neue Azoverbindungen, Verfahren zu deren Herstellung sowie deren Verwendung als Farbstoffe zum Färben und Bedrucken von Textilmaterialien, Leder und vor allem Papier.

Die neuen Azoverbindungen entsprechen der Formel I

$$\left[ F - A \right] - (B)_x \qquad (I),$$

worin bedeuten:

F den Rest einer sulfonsäuregruppenhaltigen Azoverbindung

A einen Rest der Formel

$-NR-CO-R_1-$, 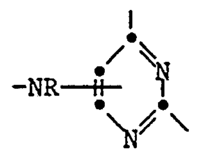 oder 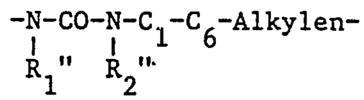 ,

worin bedeuten:

R Wasserstoff oder $C_1$-$C_4$-Alkyl,

$R_1$ einen unverzweigten oder verzweigten $C_1$-$C_6$-Alkylenrest, oder einen $C_2$-$C_6$-Vinylenrest,

$R_1''$ und $R_2''$ unabhängig voneinander Wasserstoff oder $C_1$-$C_4$-Alkyl, wobei im Falle von $R_2''$ die $C_1$-$C_4$-Alkylgruppe durch eine

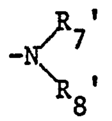

Gruppe substituiert sein kann,

worin $R_7'$ Wasserstoff, Alkyl ($C_1$-$C_4$), gegebenenfalls durch Hydroxyl, Phenyl oder Carbamoyl substituiert, Cyclohexyl gegebenenfalls durch 1 bis 3 Methylgruppen substituiert oder einen Phenylrest darstellt, und

$R_8'$ Wasserstoff, Alkyl ($C_1$-$C_4$) gegebenenfalls durch Hydroxyl, Phenyl oder Carbamoyl substituiert, bedeutet oder die Reste $R_7'$ und $R_8'$ bilden zusammen mit dem gemeinsamen N-Atom einen Pyrrolidin-, Piperidin-, Morpholin- oder Piperazinring,

B einen basischen oder kationischen Rest der Formel

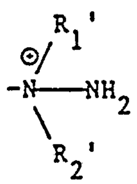 , 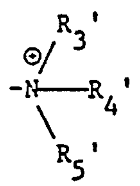 , 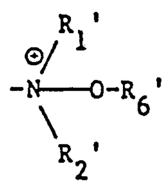 oder 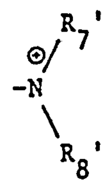

worin bedeutet:

$R_1'$ bis $R_4'$ unabhängig voneinander einen Alkylrest ($C_1$-$C_4$) der gegebenenfalls durch eine Hydroxylgruppe substituiert ist,

$R_5'$ und $R_6'$ unabhängig voneinander einen Alkylrest ($C_1$-$C_4$),

$R_7'$ Wasserstoff, Alkyl ($C_1$-$C_4$) gegebenenfalls durch Hydroxyl, Phenyl oder Carbamoyl substituiert, Cyclohexyl gegebenenfalls durch 1 bis 3 Methylgruppen substituiert oder einen Phenylrest,

$R_8'$ Wasserstoff, Alkyl ($C_1$-$C_4$) gegebenenfalls durch Hydroxyl, Phenyl, oder Carbamoyl substituiert, oder die Reste $R_1'$ und $R_2'$ oder die Reste $R_3'$ und $R_4'$ oder die Reste $R_7'$ und $R_8'$ bilden zusammen mit dem gemeinsamen N-Atom einen Pyrrolidin-, Piperidin-, Morpholin- oder Piperazinring und die Reste $R_3'$, $R_4'$ und $R_5'$ mit dem gemeinsamen N-Atom einen Pyridiniumring oder einen Rest der Formeln

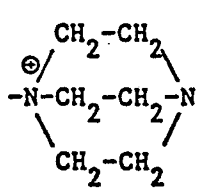 , oder 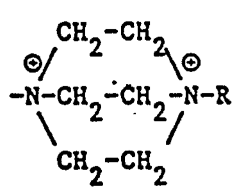

worin R Wasserstoff oder $C_1$-$C_4$-Alkyl bedeutet,

oder den Rest eines basischen Polyamins der Formel

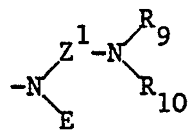

worin

$Z^1$ einen gegebenenfalls durch 1 bis 3 -O- oder -NH-Gruppen unterbrochenen Alkylrest mit 2 bis 12 C-Atomen,

$R_9$ und $R_{10}$ unabhängig voneinander jeweils Wasserstoff oder $C_1$-$C_8$-Alkyl, welches durch OH substituiert sein kann,

E Wasserstoff, $C_1$-$C_{18}$-Alkyl oder eine Gruppe der Formel

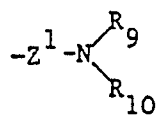

wobei $Z^1$, $R_9$ und $R_{10}$ die vorstehend genannten Bedeutungen aufweisen,

oder

E und $R_{10}$ zusammen Ethylen bedeutet, falls $Z^1$ ebenfalls Ethylen ist, oder worin B den Rest eines kationischen Polyamins der Formel

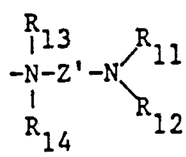

worin

Z' eine gegebenenfalls durch

$CH_3$
|
-N- unterbrochene Alkylenkette mit 2 bis 5 C-Atomen,

$R_{11}$ und $R_{12}$ Wasserstoff oder $C_1$-$C_4$-Alkyl,

$R_{13}$ $C_1$-$C_4$-Alkyl und

$R_{14}$ $C_1$-$C_4$-Alkyl oder $C_2$-$C_4$-Alkylen-$NH_2$ bedeutet

und worin

x mindestens 1 ist, mit der Bedingung, dass im Molekül mehr Gruppen B vorhanden sind als Sulfonsäuregruppen.

In dem für F definierten Rest einer sulfonsäuregruppenhaltigen Azoverbindung gehort die Diazokomponente vor allem der aromatich carbocyclischen Reihe an wie beispielsweise der Anilin-, Aminonaphthalin-, Aminodibenzofuran-, Benzthiazol-aminophenyl- oder Aminoazobenzolreihe. Die Diazokomponente kann aber auch abgeleitet sein von Diaminen der Formel

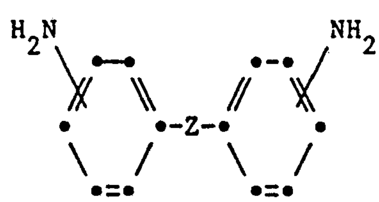

worin Z die direkte Bindung oder einen zweiwertigen Rest bedeutet; als derartige zweiwertige Reste Z sind beispielsweise genannt:

$-SO_2NH-$, 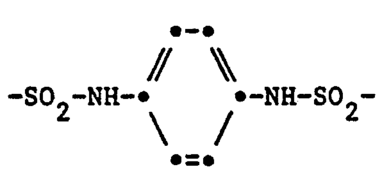, 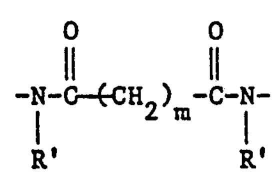

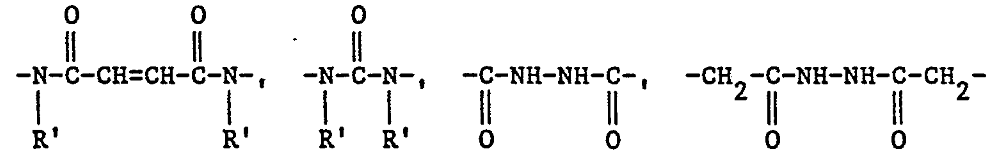

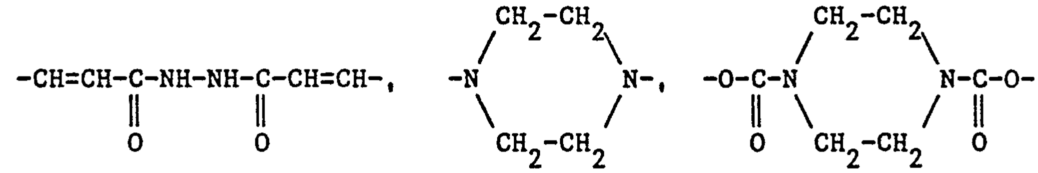

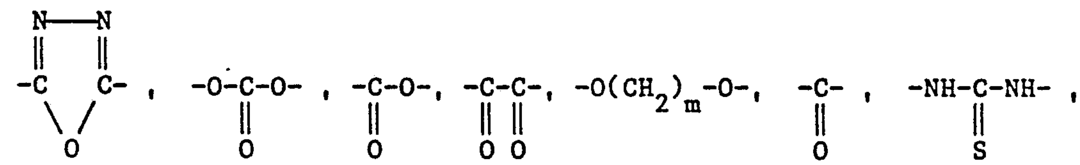

-S-, -O-, -CH=CH-, -S-S-, 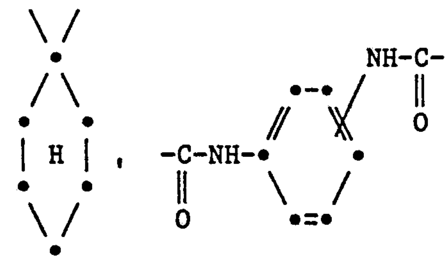 ,

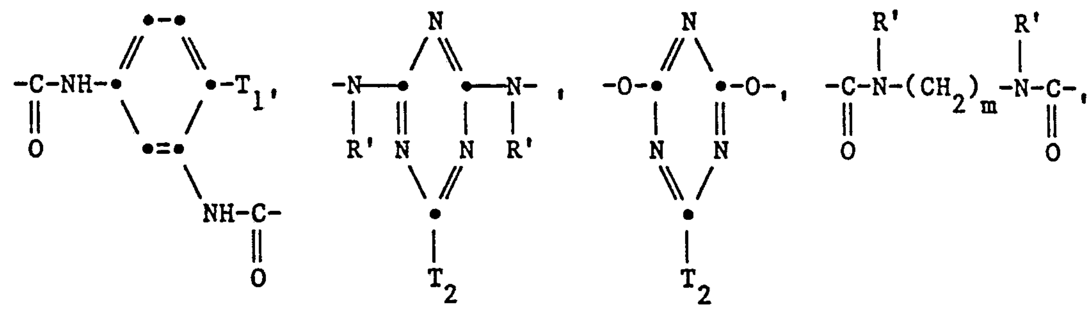

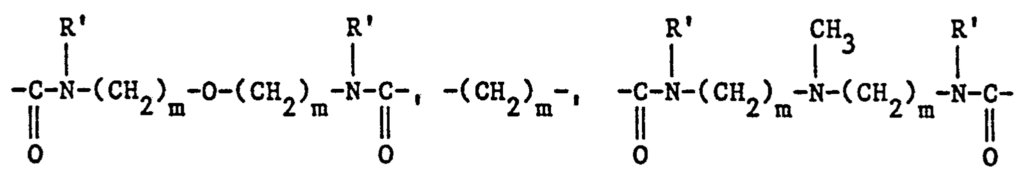 oder

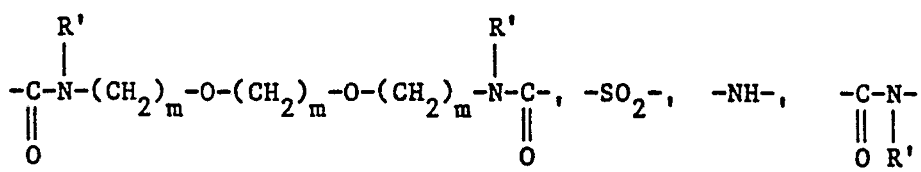 ,

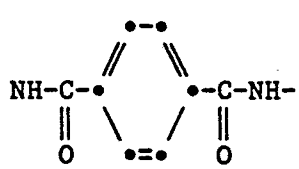 , -N=N- oder -NH-CO-NH-.

In diesen Formeln bedeutet der Rest R' Wasserstoff oder einen Alkylrest mit 1 bis 4 C-Atomen; $T_1$ ist ein Halogenatom wie Fluor, Chlor oder Brom, ein Alkylrest mit 1 bis 4 C-Atomen oder ein Alkoxyrest mit 1 bis 4 C-Atomen; $T_2$ ist ein Halogenatom wie Fluor, Chlor oder Brom, oder ein Rest der Formel $-NHCH_2CH_2OH$ oder $-N(CH_2CH_2OH)_2$ oder es hat auch die Bedeutung der basischen bzw. kationischen Gruppe B und der Index m ist gleich 1, 2, 3 oder 4.

In den bevorzugten Azoverbindungen leitet sich die Diazokomponente von der Aminoazobenzolreihe ab. Die Kupplungskomponente gehört bevorzugt der Naphthalinreihe an; sie steht vorzugsweise für 1-Hydroxy-6-aminonaphthalin-3-sulfonsäure, 1-Hydroxy-7-aminonaphthalin-3-sulfonsäure, 1-Hydroxy-8-aminonaphthalin-3,6-disulfonsäure, 1-Hydroxy-6-(benzoylamino)-naphthalin-3-sulfonsäure und 1-Hydroxy-7-(benzoylamino)-naphthalin-3-sulfonsäure.

Sowohl die Diazokomponente als auch die Kupplungskomponente können weiter substituiert sein; als Substituenten kommen in Frage: die in Azofarbstoffen üblichen Substituenten wie $C_1$-$C_4$-Alkyl (unverzweigt und verzweigt), z. B. Methyl, Äthyl, iso-Propyl, n-Propyl; $C_1$-$C_4$-Alkoxy (unverzweigt und verzweigt), z. B. Methoxy, Äthoxy, n-Propoxy, tert-Butoxy, Phenoxy, $SO_2NH$-Alkyl-$C_1$-$C_4$, NHCO-Alkyl-$C_1$-$C_4$,

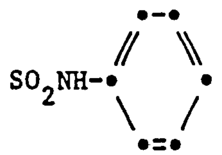 und 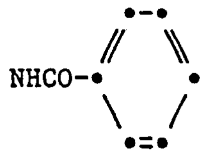 .

In den bevorzugten Azoverbindungen der Formel I bedeutet F den Rest einer sulfonsäuregruppenhaltigen Disazoverbindung.

Bedeutet A einen Rest der Formel -NR-CO-$R_1$-, worin R = Wasserstoff oder $C_1$-$C_4$-Alkyl und $R_1$, $C_1$-$C_6$-Alkylen oder $C_2$-$C_6$-Vinylen bedeutet, so handelt es sich beim $C_1$-$C_4$-Alkyl- und $C_1$-$C_6$-Alkylenrest sowohl um unverzweigte und verzweigte Reste; der $C_1$-$C_6$-Alkylenrest $R_1$ kann noch substituiert sein (z. B. durch OH, Halogen, wie F, Cl, Br); als derartige Reste A sind beispielsweise genannt:

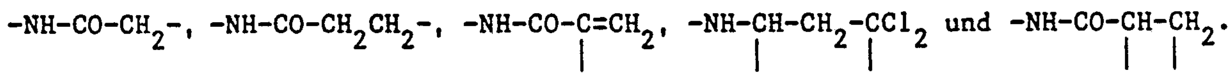

Bedeutet A einen Rest der Formel

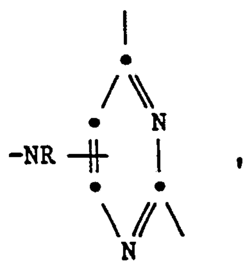 ,

so kann dieser heterocyclische Rest noch weiter substituiert sein (z. B. durch Halogen, vor allem Cl).

Bedeutet A einen Rest der Formel

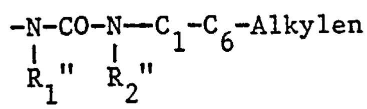

so kommen als derartige Reste beispielsweise in Frage:

$-NH-CO-NH-CH_2-CH_2-$,
$-NH-CO-NH-(CH_2)_6-$
und $-N(CH_3)-CO-NH-CH_2-CH_2$.

Der Rest A ist direkt oder über ein Brückenglied, z. B.

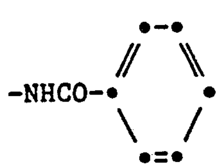 ,

vorteilhaft an die Kupplungskomponente der Azoverbindung F gebunden, wobei die -NR-Gruppe bzw. -$NR_1$''-Gruppe des Restes A der Aminogruppe der Kupplungskomponente im Farbstoffrest F entspricht.

Als basische oder kationische Reste B kommen vorallem Aminogruppen, Hydrazin- oder Hydroxylaminogruppen in Betracht.

Es handelt sich um folgende Gruppen:

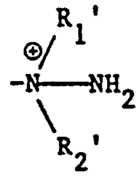, 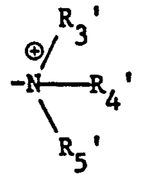, 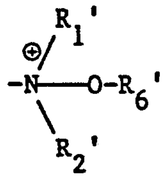 oder 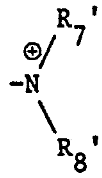

worin bedeutet:

$R_1'$ bis $R_4'$ unabhängig voneinander einen Alkylrest ($C_1$-$C_4$), der gegebenenfalls durch eine Hydroxylgruppe substituiert ist,

$R_5'$ und $R_6'$ unabhängig voneinander einen Alkylrest ($C_1$-$C_4$),

$R_7'$ Wasserstoff, Alkyl ($C_1$-$C_4$) gegebenenfalls durch Hydroxyl, Phenyl oder Carbamoyl substituiert, Cyclohexyl gegebenenfalls durch 1 bis 3 Methylgruppen substituiert oder einen Phenylrest,

$R_8'$ Wasserstoff, Alkyl ($C_1$-$C_4$) gegebenenfalls durch Hydroxyl, Phenyl, oder Carbamoyl substituiert, oder die Reste $R_1'$ und $R_2'$ oder die Reste $R_3'$ und $R_4'$ oder die Reste $R_7'$ und $R_8'$ bilden zusammen mit dem gemeinsamen N-Atom einen Pyrrolidin-, Piperidin-, Morpholin- oder Piperazinring und die Reste $R_3'$, $R_4'$ und $R_5'$ mit dem gemeinsamen N-Atom einen Pyridiniumring oder einen Rest der Formeln

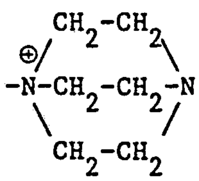 und 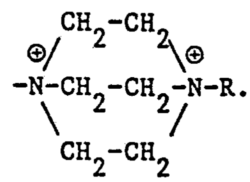

Handelt es sich bei B um einen kationischen Hydrazinrest der Formel

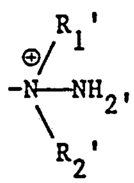

so bedeuten die Reste $R_1'$ und $R_2'$ unabhängig voneinander Alkylreste mit 1 bis 4 C-Atomen. Die Alkylreste können gegebenenfalls durch eine Hydroxylgruppe substituiert sein oder mit dem gemeinsamen Stickstoffatom einen Pyrrolidin-, Piperidin-, Morpholin- oder Piperazinring bilden. Beispielsweise kommen die folgenden Reste in Frage:

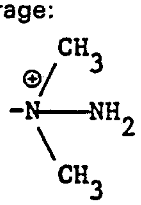, 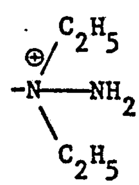, 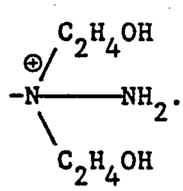.

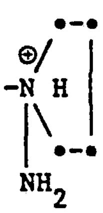, 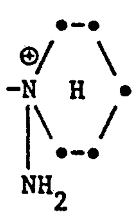, 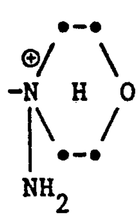, 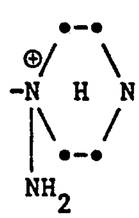.

Hat B die Bedeutung einer Aminogruppe der Formel

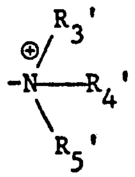 ,

so bedeuten die Reste $R_3'$, $R_4'$ und $R_5'$ unabhängig voneinander einen Alkylrest mit 1 bis 4 C-Atomen, wobei die Reste $R_3'$ und $R_4'$ noch durch eine Phenyl- oder Hydroxylgruppe substituiert sein können. Die Reste $R_3'$ und $R_4'$ können ebenfalls mit dem gemeinsamen N-Atom einen Pyrrolidin-, Piperidin-, Morpholin- oder Piperazinring bilden.

Als derartige kationische aminogruppen kommen beispielsweise in Frage:

$-\overset{\oplus}{N}(CH_3)_3$ $-\overset{\oplus}{N}(C_2H_4OH)_3$ 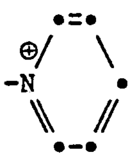 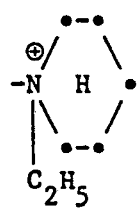 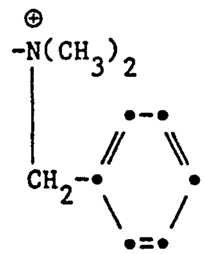

$-\overset{\oplus}{N}(C_2H_5)_3$ 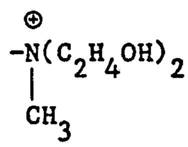 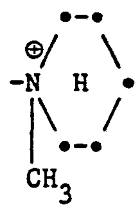 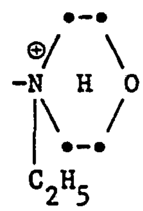 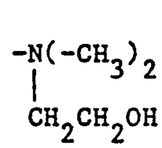

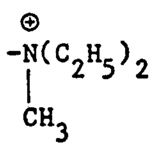 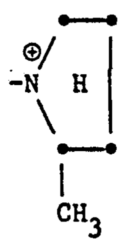 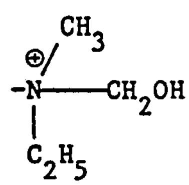 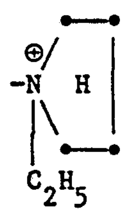 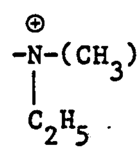 .

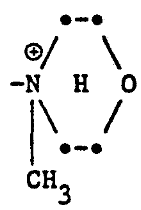

Bedeutet der Rest B einen kationischen Hydroxylaminorest der Formel

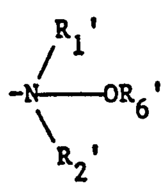 ,

so haben die Reste $R_1'$ und $R_2'$ die bereits angegebene Bedeutung. Der Rest $R_6'$ ist ein Alkylrest mit 1 bis 4 C-Atomen. Die folgenden kationischen Hydroxylaminoderivate sind beispielsweise genannt:

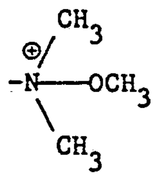 , 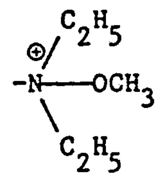 , 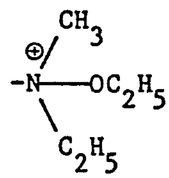 , 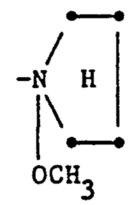 ,

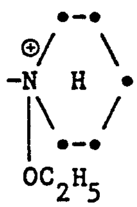 , 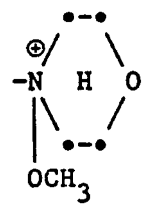 , 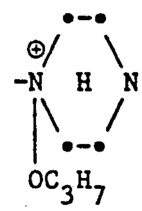 .

Schliesslich bedeutet der Rest B eine Aminogruppe der Formel

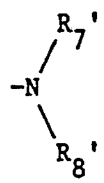 .

Die Reste $R_7'$ und $R_8'$ sind Wasserstoff oder Alkyl mit 1 bis 4 Kohlenstoffatomen; dabei kann der Alkylrest noch durch eine Hydroxyl-, Phenyl- oder Carbamoylgruppe substituiert sein. Weiterhin hat der Rest $R_7'$ die Bedeutung eines gegebenenfalls durch 1 bis 3 Methylgruppen substituierten Cyclohexylrestes oder eines Phenylrestes. Schliesslich können die Reste $R_7'$ und $R_8'$ mit dem gemeinsamen N-Atom einen Pyrrolidin-, Piperidin-, Morpholin- oder Piperazinring bilden. Als derartige Aminogruppen sind beispielsweise genannt:

$-N(CH_3)_2$

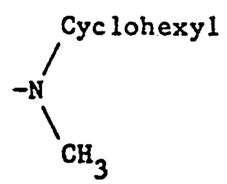

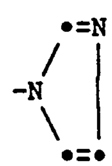

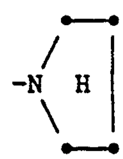

$-N(C_2H_5)_2$

$-NH-CH_3$

$-NH-C_2H_7$

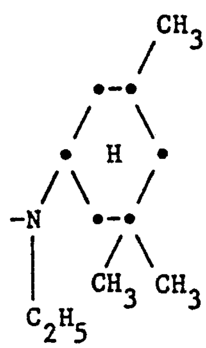

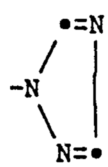

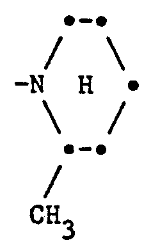

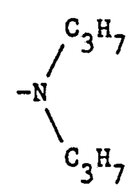

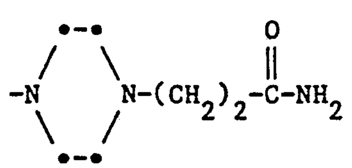

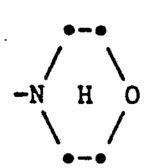

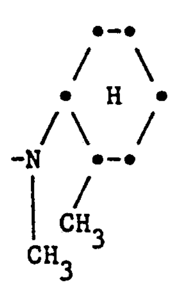

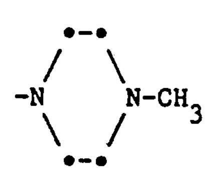

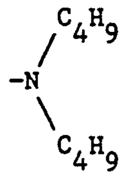 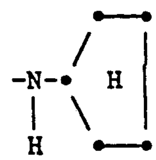 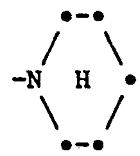 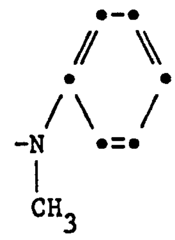 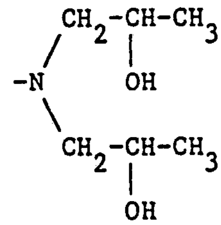

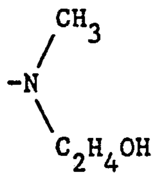 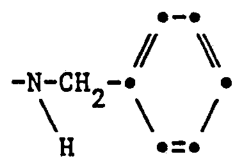 $-N(C_2H_4OH)_2$

Ausser diesen basischen oder kationischen Resten kann B auch noch den Rest eines basischen oder kationischen Polyamins der Formel

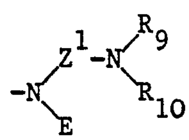

darstellen, worin

$Z^1$ einen gegebenenfalls durch 1 bis 3 -O- oder -NH-Gruppen unterbrochenen Alkylrest mit 2 bis 12 C-Atomen,

$R_9$ und $R_{10}$ unabhängig voneinander jeweils Wasserstoff oder $C_1$-$C_8$-Alkyl, welches durch OH substituiert sein kann,

E Wasserstoff, $C_1$-$C_{18}$-Alkyl oder eine Gruppe der Formel

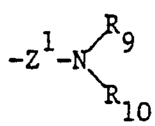

wobei $Z^1$, $R_9$ und $R_{10}$ die vorstehend genannten Bedeutungen aufweisen, oder

E und $R_{10}$ zusammen Ethylen bedeutet, falls $Z^1$ ebenfalls Ethylen ist, oder worin B den Rest eines kationischen Polyamins der Formel

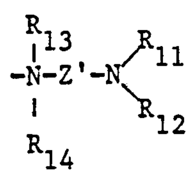

worin

Z' eine gegebenenfalls durch

$CH_3$
|
-N- unterbrochene Alkylenkette mit 2 bis 5 C-Atomen,

$R_{11}$ und $R_{12}$ Wasserstoff oder $C_1$-$C_4$-Alkyl,

$R_{13}$ $C_1$-$C_4$-Alkyl und

$R_{14}$ $C_1$-$C_4$-Alkyl oder $C_2$-$C_4$-Alkylen-$NH_2$

bedeutet.

Aus der grossen Vielzahl der möglichen Polyaminreste sind beispielsweise genannt:

$-HN-CH_2CH_2-N(C_2H_5)_2$, $-HN-CH_2CH_2-CH_2-N(C_2H_5)_2$,
$-HN-CH_2CH_2CH_2OCH_2CH_2OCH_2CH_2CH_2NH_2$,
$-HN-CH_2CH_2CH_2OCH_2CH_2CH_2CH_2-O-(CH_2)_3-NH_2$

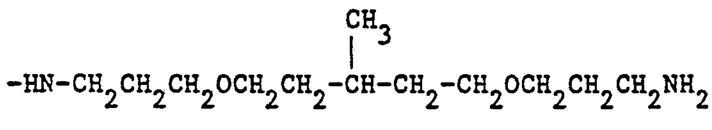,

$-HN-(CH_2)_6NH_2$, 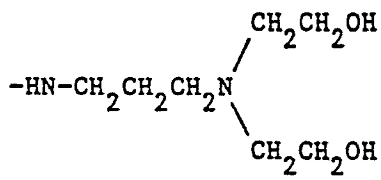, 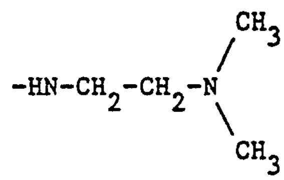,

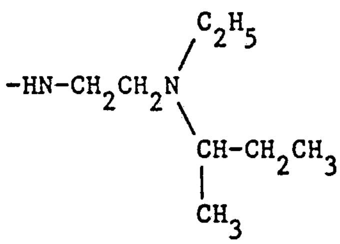, 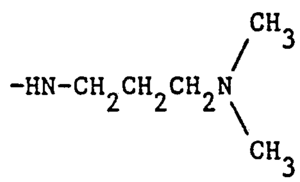, 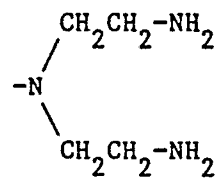,

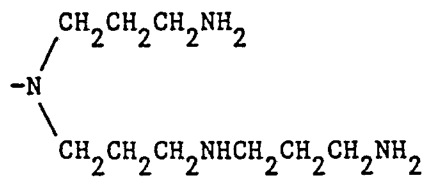, 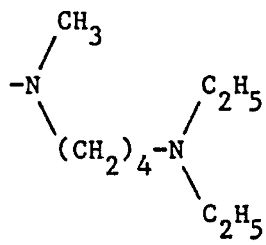,

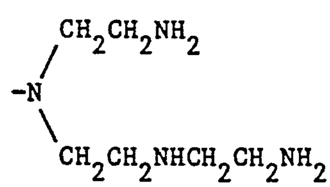, 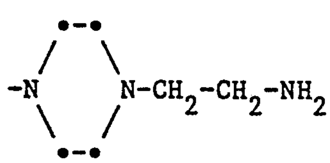, 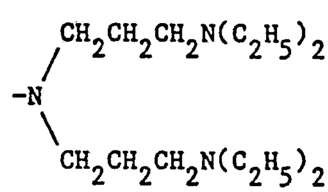,

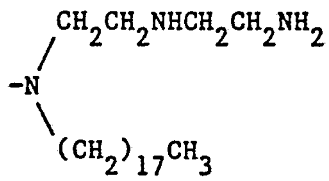, 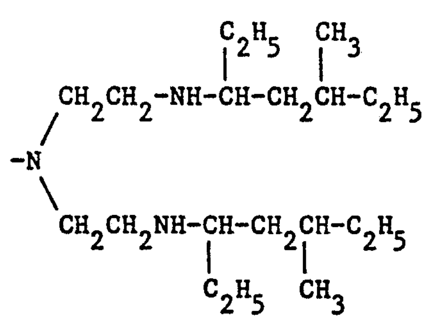,

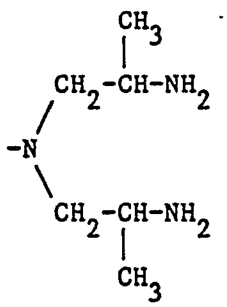 , 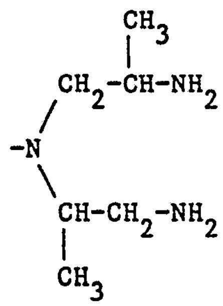 , 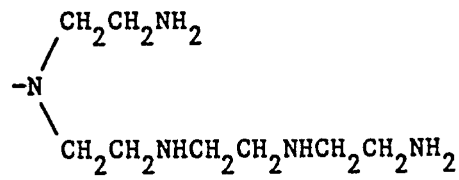 ,

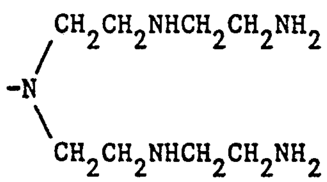 , 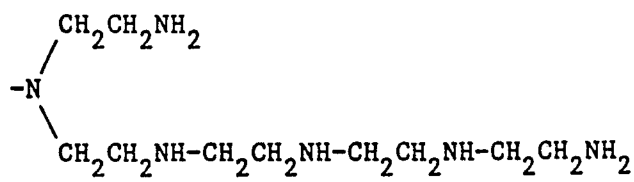 ,

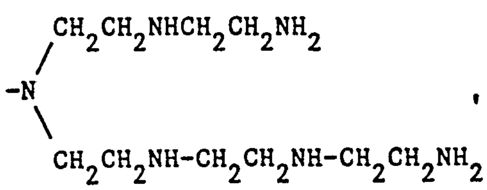 , 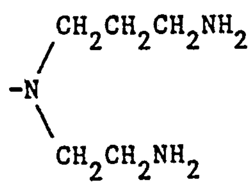 , 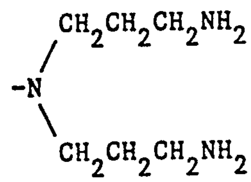 ,

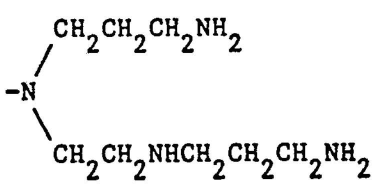 , 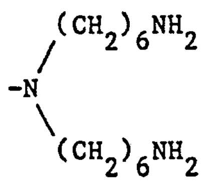 , 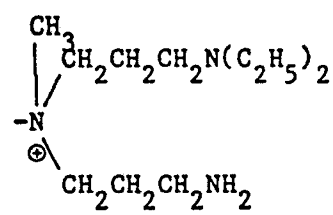

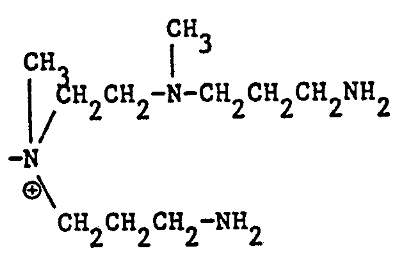 , 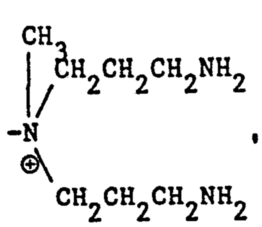 , 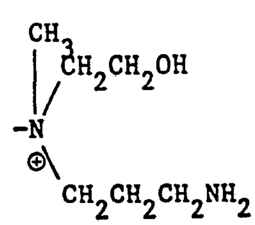

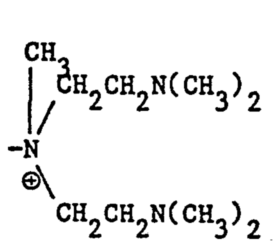 , 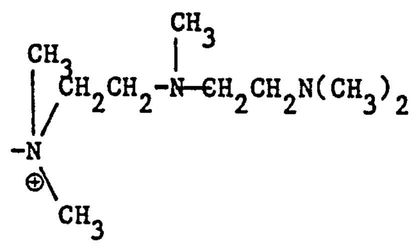 ,

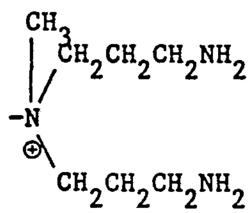 , 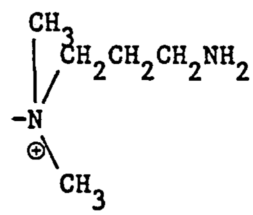 , 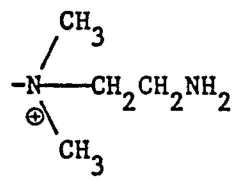 .

In den Fällen, wo eine -NH-$CH_2$-Gruppierung vorliegt, kann das N-Atom auch mit 2 einzelnen Bindungen

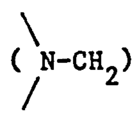

zu A, Bestandteil eines Aziridin-Ringes der Formel

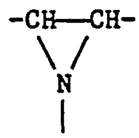

sein.

Die Gruppe B ist an den Rest A mindestens einmal gebunden und kann zusätzlich noch in der Azoverbindung F, (auch in der Diazokomponente) direkt oder vor allem über einen Substituenten wie z. B. einer Alkyl-, Alkoxy-, Acylamino- oder Sulfonamidogruppe gebunden, lokalisiert sein.

Bedeutet B eine kationische Gruppe, so liegen die Azoverbindungen der Formel I in Form ihrer anorganischen oder organischen Salze vor.

Als Gegenion kommen sowohl anorganische wie organische Anionen in Frage; beispielsweise sind genannt: Halogenid-, wie Chlorid-, Bromid- oder Jodid-, Bortetrafluorid-, Sulfat-, Methylsulfat-, Aminosulfat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzoesulfonat-, Oxalat-, Maleinat-, Formiat-, Acetat-, Propionat-, Lactat-, Succinat-, Chloracetat-, Tartrat-, Methansulfonat- oder Benzoationen, oder komplexe Anionen, wie das von Chlorzindoppelsalzen.

Bevorzugte Anionen sind in Abhängigkeit von der Verwendungsart der Verbindungen: z. B. das Formiat-, Acetat-, Lactat- und Chlorid-ion (für Textil- und Papiermaterialien); und das Chlorid-ion für die Tintenbereitung.

In den Azoverbindungen der Formel I können die Sulfonsäuregruppen mit den kationischen Gruppen B auch ein inneres Salz bilden.

Die erfindungsgemässen Azoverbindungen der Formel I, worin A den Rest der Formeln

-NR-CO-$R_1$- und

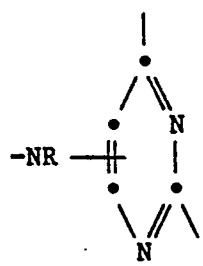

bedeutet, werden z. B. erhalten, indem man auf eine Kupplungskomponente ein diazotiertes Amin kuppelt, wobei der Rest A-Halogen in der Diazokomponente oder in der Kupplungskomponente bereits vorliegt und die

Verbindung F-A-Halogen mit einer den Rest B einführenden Verbindung $(H)_y$-B (y = 0, 1, 2) umsetzt und die erhaltene Verbindung gegebenenfalls quaterniert;

sofern A den Rest der Formel

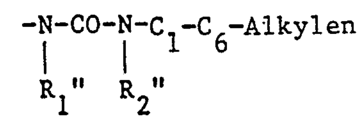

bedeutet,

erhält man diese Verbindungen, indem man entweder:

a) eine Verbindung der Formel II

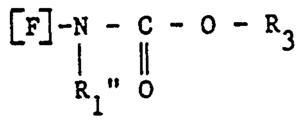

(II)

worin $R_1''$ und F die angegebene Bedeutung haben und $R_3$ unsubstituiertes Phenyl, Halogen substituiertes Phenyl, $C_1$-$C_4$-Alkyl substituiertes Phenyl, $C_1$-$C_4$-Alkoxy substituiertes Phenyl, $C_1$-$C_4$-Alkyl oder $C_1$-$C_4$-Alkylenphenyl bedeutet, mit einer Verbindung der Formel III

H - B'- R (III)

worin R die angegebene Bedeutung hat und B' ein den Rest $(B)_x$ tragendes Brückenglied bedeutet kondensiert, oder

b) eine Verbindung der Formel VIII

[F]-NH (VIII)
|
$R_1''$

mit einer Verbindung der Formel III in Gegenwart von Phosgen umsetzt, wobei die Symbole F und $R_1''$ die angegebene Bedeutung haben, oder indem man

c) eine Verbindung der Formel VIII

[F]-NH (VIII)
|
$R_1''$

mit einer Verbindung der Formel IX

Cl-CO-B'-R (IX)

bzw. $R_3$OCO-B'-R (IXa)

worin F, $R_1''$, $R_3$, B' und R die angegebene Bedeutung haben, kondensiert.

Die Ausgangsstoffe werden wie folgt erhalten:

I) Kupplungskomponenten (KK) die den Rest A-Halogen enthalten und zur Herstellung der Azoverbindung F verwendet werden, werden z. B. hergestellt indem man eine Kupplungskomponente welche den Rest -NH-R bzw. -NH-$R_1''$ enthält (worin R und $R_1''$ die angegebene Bedeutung haben) mit einer Verbindung der Formel

A'-(-Halogen$)_{2\ \text{bis}\ 5}$

worin A' einen Rest der Formeln -CO-$R_1$- oder

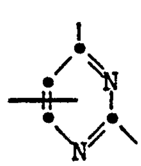

bedeutet,

wobei die Symbole R und $R_1$ die angegebene Bedeutung haben, nach bekannter Art und Weise im wässrigen oder organisch-wässrigem Medium in Gegenwart eines Säureakzeptors (Base) zu einer Verbindung KK-A-(-

Halogen)$_{1\ \text{bis}\ 4}$ kondensiert.

II) Diazokomponenten (DK) die den Rest A-Halogen enthalten und zur Herstellung der Azoverbindung F verwendet werden, werden z. B. dargestellt, indem man eine Diazokomponente welche den Rest -NH-R bzw. -NH-$R_1''$ enthält (worin R und $R_1''$ die angegebene Bedeutung haben) mit einer Verbindung der Formel

A'-(-Halogen)$_{2\ \text{bis}\ 5}$

worin A' einen Rest der Formeln -CO-$R_1$- oder

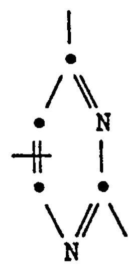

bedeutet, wobei die Symbole R und $R_1$ die angegebene Bedeutung haben, nach bekannter Art und Weise im wässrigen oder organisch-wässrigem Medium in Gegenwart eines Säureakzeptors (Base) zu einer Verbindung DK-A-(-Halogen)$_{1\ \text{bis}\ 4}$ kondensiert.

III) Als die den Rest B einführenden Verbindungen kommen z. B. die Verbindungen B als solche (z. B. Pyridin oder Triäthylendiamin) oder H-B oder $H_2B$ in Frage. Genannt sind beispielsweise 3-Diäthylaminopropylamin und Dipropylentriamin.

IV) Verbindungen der Formel II werden hergestellt, indem man eine Verbindung der Formel

F -N - H
 |
 $R_1''$

worin F und $R_1''$ die angegebene Bedeutung haben mit einer Verbindung der Formel

Halogen-COO-$R_3$

worin $R_3$ die genannte Bedeutung hat, im wässrigen oder organisch-wässrigem Medium in Gegenwart eines Säureakzeptors kondensiert.

V) Die Verbindungen der Formel III H-B'-R, worin R die angegebene Bedeutung hat und B' ein den Rest $(B)_x$ tragendes Brückenglied darstellt werden durch stufenweises Aufbauen erhalten. Als Brückenglied kommt in Frage:

H-N-($C_1$-$C_6$)-Alkylen-N-
 |                                   |
 R                                  R

worin R die angegebene Bedeutung hat.

Eine Herstellungsmöglichkeit ist die, dass man B, H-B bzw. $(H)_2$-B mit Tri- oder Tetrachlorpyrimidin zur Umsetzung bringt und anschliessend mit den vorgängig als Brückenglied genannten Diaminen, wo die freie Valenz durch ein Wasserstoffatom substituiert ist, kondensiert.

VI) Verbindungen der Formel VIII sind bekannt und können nach bekannten Methoden hergestellt werden, ebenso

VII) Verbindungen der Formel IX bzw. IXa.

Bei all diesen Herstellungsverfahren handelt es sich um an sich bekannte Verfahren. Demzufolge wird die Kupplungsreaktion in an sich üblicher Weise durchgeführt, zweckmässig in wässrigem, schwach saurem bis schwach alkalischem Medium. Ebenso werden die Kondensationsreaktionen und die Phosgenierungsreaktion der Verbindung VII mit der Verbindung III nach an sich üblichen und bekannten Methoden vorgenommen.

Die erhaltenen Azoverbindungen der Formel I werden auf an sich bekannte Weise aus dem Reaktionsgemisch isoliert.

In den Azoverbindungen der Formel I können die basischen Gruppen B durch Einwirkung geeigneter Alkylierungsmittel auch in kationische Gruppen B nach bekannter Art und Weise übergeführt werden.

Als Alkylierungsmittel kommen beispielsweise Alkylhalogenide, β-Halogenpropionitrile, Halogenhydrine, Alkylenoxide, Alkylester der Schwefelsäure oder Alkylester organischer Sulfonsäuren in Betracht wie Methylchlorid, -bromid oder -jodid, Äthylchlorid, -bromid oder -jodid, Propylbromid oder -jodid, Benzylchlorid

oder -bromid, β-Chlorpropionitril, Äthylenchlorhydrin, Äthylen- oder Propylenoxid, Dimethylsulfat, Diäthylsulfat, Benzolsulfonsäuremethylester, p-Toluolsulfonsäuremethyl-, -äthyl-, -propyl- oder -butylester, Allylchlorid oder -bromid, Methallylchlorid oder -bromid, Trimethyloxonium-borfluorid, 1,4-Dichlor-2-propen, 1-Chlor-2-buten, 1,2-Dichlor-2-propen sowie Acrylnitril.

Die Reaktion kann entweder in Wasser oder in einem organischen Lösungsmittel, beispielsweise in Aceton, Methyläthylketon oder Dimethylformamid durchgeführt werden, vorzugsweise aber in Wasser.

Als säurebindendes Mittel kann beispielsweise Magnesiumoxid, Magnesiumcarbonat, Soda, Calciumcarbonat, Natriumbicarbonat oder Natronlauge eingesetzt werden. Die Alkylierungen werden gewöhnlich bei Raumtemperatur durchgeführt; die Quaternierungen können entweder ebenfalls bei dieser Temperatur oder bei erhöhter Temperatur und gegebenenfalls unter Druck vorgenommen werden.

Die Azoverbindungen der Formel I werden sowohl als Pulver- bzw. Granulat-Präparationen als auch in Form von konzentrierten Lösungen zum Einsatz gebracht. Pulver-Präparationen werden in üblicher Weise mit Stellmaterialien wie Natriumsulfat, -phosphat, -chlorid-, -acetat in Gegenwart von Entstaubungsmitteln eingestellt, oder die Azoverbindungen werden direkt als Sprühtrocknungspräparationen in den Handel gebracht. Konzentrierte Farbstofflösungen können wässriger oder wässrig/organischer Art sein, wobei übliche und möglichst gut abbaubare Zusätze bevorzugt werden wie organische Säuren, vorzugsweise Essigsäure, Ameisensäure, Milchsäure, Zitronensäure, Amide wie Formamid, Dimethylformamid, Harnstoff, Alkohole wie Glykol, Diglykol, Diglykoläther, vorzugsweise Methyl- oder Äthyläther.

Verwendung finden die Azoverbindungen der Formel I vor allem als Farbstoffe zum Färben und Bedrucken von Textilmaterialien, Papier, Leder und zur Bereitung von Tinten. Als Textilmaterialien kommen natürliche und synthetische kationisch anfärbbare Materialien in Frage. Bevorzugt werden die neuen Azoverbindungen zum Färben und Bedrucken von Papier, Halbkartons und Kartons in der Masse und in der Oberfläche, sowie von Textilmaterialien, die z. B. vorteilhaft aus Homo- oder Mischpolymerisaten des Acrylnitrils bestehen oder synthetische Polyamide oder Polyester, welche durch saure Gruppen modifiziert sind eingesetzt. Man färbt diese Textilmaterialien vorzugsweise in wässrigem, neutralem oder saurem Medium nach dem Ausziehverfahren, gegebenenfalls unter Druck oder nach dem Kontinueverfahren. Das Textilmaterial kann dabei in verschiedenartigster Form vorliegen, beispielswiese als Faser, Faden, Gewebe, Gewirke, Stückware und Fertigware wie Hemden oder Pullover.

Mit den erfindungsgemässen Farbstoffen lassen sich egale Färbungen bzw. Drucke herstellen, die sich durch sehr gute Allgemeinechtheiten vor allem einem sehr hohen Ausziehgrad und gute Wasserechtheiten auszeichnen.

Des weiteren können die neuen Azoverbindungen der Formel I auch zum Färben und Bedrucken von natürlichen und regenerierten Cellulosematerialien, vor allem von Baumwolle und Viscose verwendet werden, wobei man ebenfalls farbstarke Ausfärbungen erhält.

Die neuen Azoverbindungen der Formel I haben auf diesen Textilmaterialien ein gutes Ziehvermögen, einen guten Ausziehgrad und die erhaltenen Färbungen weisen sehr gute Echtheiten, vor allem Nassechtheiten auf.

Desweiteren dienen die neuen Azoverbindungen zum Färben von Polyacrylnitrilmaterialien in der Spinnmasse, und zum Färben von Polyacrylnitril-Nasskabel. Sie können auch für Stempelfarben und im Jet-Printing eingesetzt werden.

Eine bevorzugte Verwendung der neuen Azoverbindungen der Formel I liegt in der Anwendung zum Färben von Papier aller Arten, vor allem von gebleichtem, ungeleimtem und geleimten ligninfreiem Papier, wobei von gebleichtem oder ungebleichtem Zellstoff ausgegangen werden kann und Laub- oder Nadelholz-Zellstoff, wie Birken- und/oder Kiefernsulfid- und/oder Sulfat-Zellstoff verwendet werden kann. Ganz besodners geeignet sind diese Verbindungen zum Färben von ungeleimtem Papier (z. B. Servietten, Tischdecken, hygienischen Papieren) als Folge ihrer sehr hohen Affinität zu diesem Substrat.

Die neuen Azoverbindungen der Formel I ziehen auf diese Substrate sehr gut auf, wobei die Abwasser farblos bleiben, was ein grosser Vorteil insbesondere im Hinblick auf die heutigen Abwasser-Gesetze ist.

Die erhaltenen Färbungen zeichnen sich durch gute Allgemeinechtheiten aus, wie einer guten Lichtechtheit bei gleichzeitig hoher Klarheit und Farbstärke und Nassechtheit, d. h. sie zeigen keine Neigung zum Ausbluten, wenn gefärbtes Papier in nassem Zustand mit feuchtem weissem Papier in Berührung gebracht wird. Darüber hinaus weisen sie eine gute Alaun-, Säure- und Alkali-Echtheit auf. Die Nassechtheit bezieht sich nicht nur auf Wasser, sondern auch auf Milch Fruchtsäfte und gesüsste Mineralwasser, wegen ihrer guten Alkoholechtheit sind sie auch gegen alkoholische Getränke beständig. Diese Eigenschaft ist z. B. besonders für Servietten und Tischdecken erwünscht, bei denen vorhersehbar ist, dass das gefärbte Papier in nassem Zustand (z. B. getränkt mit Wasser, Alkohol, Tensid-Lösung etc...) in Berührung mit anderen Flächen wie Textilien, Papier und dergleichen kommt, die gegen Verschmutzung geschützt werden müssen.

Die hohe Affinität für Papier und die grosse Ausziehgeschwindigkeit der neuen Farbstoffe ist für das Kontinue-Färben von Papier von grossem Vorteil.

Schlussendlich können die neuen Azoverbindungen der Formel I noch zum Färben von Leder (durch z. B. Sprühen, Bürsten und Tauchen) und zur Bereitung von Tinten verwendet werden.

Es sind bereits Farbstoffe bekannt, welche einen kationischen Rest enthalten, der über ein Brückenglied an einen Azofarbstoff gebunden ist. Die EP-A-62 824 beschreibt Farbstoffe mit dem Brückenglied

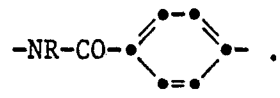

Der Ersatz einer aromatischen Phenylengruppe durch eine aliphatische Alkylen- oder Vinylengruppe wurde durch diese EP-A-62 824 jedoch keineswegs nahegelegt.

Die folgenden Beispiele veranschaulichen die Erfindung. Teile (T) sind - sofern nichts anderes angegeben - Gewichtsteile und die Temperaturen sind in Grad Celsius angegeben.

**Beispiel 1:**

9.9 T 4-Aminoazobenzol werden in 125 T Wasser und 13 T konzentrierter Salzsäure suspendiert und auf 0 - 5° abgekühlt. Hierauf werden 12.5 T einer wässrigen 4 N-Natriumnitritlösuöng zugetropft.

In einem zweiten Reaktionsgefäss wird eine Lösung von 23 T Dibrompropionyl-J-säure (erhalten durch Acylierung von J-Säure mit Dibrompropionylchlorid) in 150 ml Wasser vorgelegt und obige Diazolösung bei pH 6 - 7 zugetropft. Man lässt über Nacht ausrühren und versetzt dann mit 7 T 3-Diäthylaminopropylamin; der Farbstoff wird durch Aussalzen der Lösung mit Natriumchlorid als Pulver isoliert und entspricht der Formel:

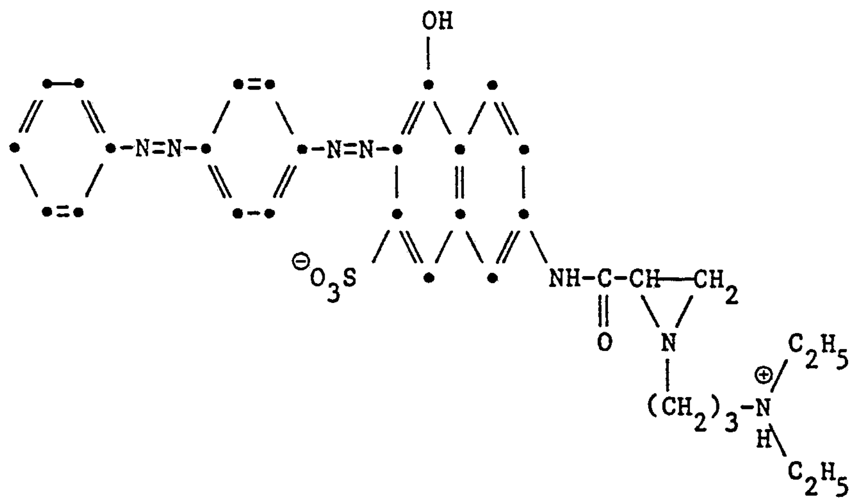

Der Farbstoff ist in Wasser gut löslich und färbt Papier in roten Tönen; die Färbungen zeigen gute Licht- und Nassechtheiten.

Gemäss dieser Arbeitsweise lassen sich weitere Diazoverbindungen analoger Strukturen herstellen, für welche in der folgenden Tabelle 1 die Kupplungskomponente und die Nuance der Färbung auf Papier angegeben sind.

**Tabelle 1**

| Bsp. | Kupplungskomponente | Nuance |
|---|---|---|
| 2 | 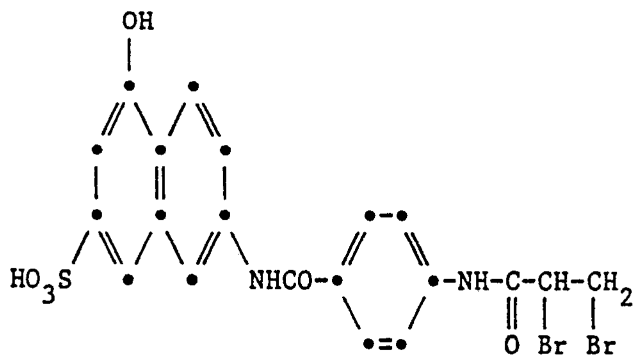 | rot |
| 3 | 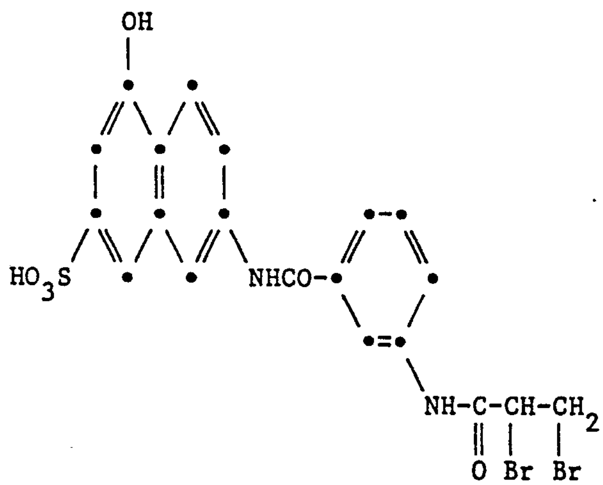 | rot |
| 4 | 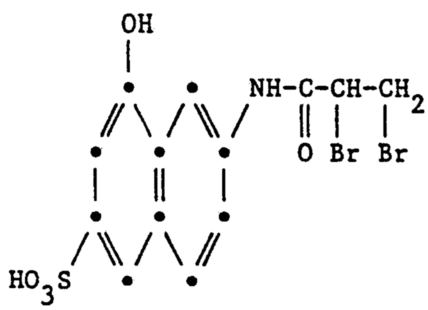 | blau-stichig rot |

**Tabelle 1** (Fortsetzung)

| Bsp. | Kupplungskomponente | Nuance |
|---|---|---|
| 5 | 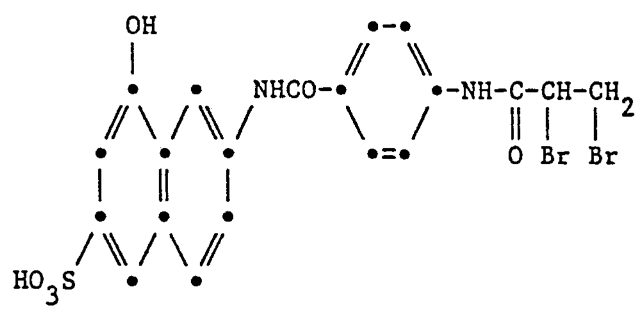 | blau-stichig rot |
| 6 | 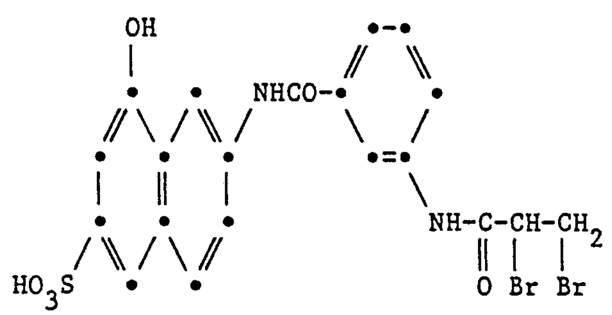 | blau-stichig rot |

**Beispiel 7:**

Ersetzt man im Beispiel 1 die 9,9 T 4-Aminoazobenzol durch entsprechende Teile p-Phenetidin so erhält man den Farbstoff der Formel:

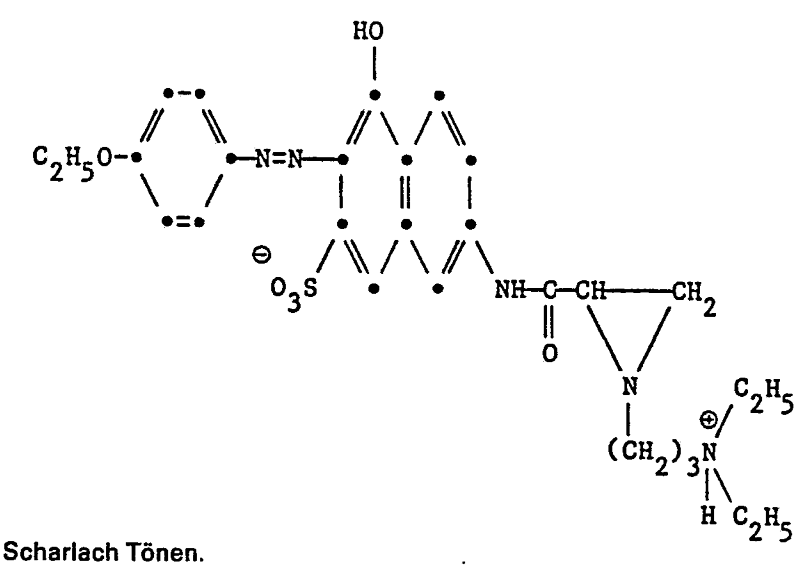

Er färbt Papier in Scharlach Tönen.

**Beispiel 8:**

Ersetzt man im Beispiel 1 die 7 T 3-Diäthylaminopropylamin durch 7 T 3-Dimethylaminopropylamin und quaterniert anschliessend mit Dimethylsulfat, so erhält man den Farbstoff der Formel:

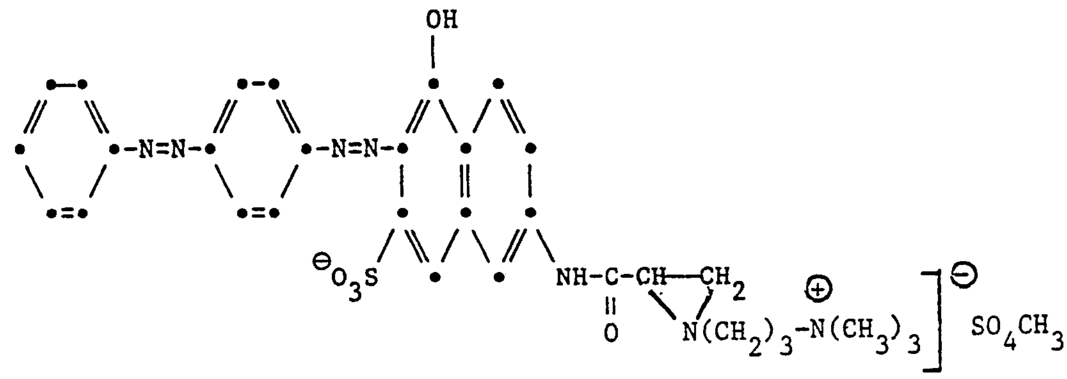

**Beispiel 9:**

24 T J-Säure werden in 220 T Wasser mit 11 T konzentrierter Natronlauge bei pH 7,5 gelöst. Diese Lösung wird mit 11 T Natriumbicarbonat und 14 T Chloracetylchlorid versetzt. Eine Diazolösung hergestellt gemäss Beispiel 1 wird bei pH 6 - 6,5 zugetropft; man lässt über Nacht ausrühren, versetzt mit 12 T Triäthylendiamin und kocht 4 Stunden bei 95°; anschliessend wird bei Raumtemperatur abgekühlt und der Farbstoff wird mit Natriumchlorid ausgesalzen. Er entspricht der Formel:

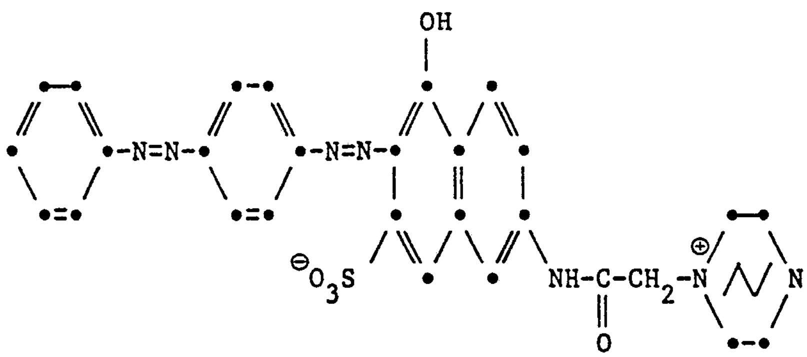

**Beispiel 10:**

6 T des Farbstoffes erhalten gemäss Beispiel 9 werden in 100 T Wasser mit 2 T Dimethylsulfat bei 30° versetzt. Man erhält den Farbstoff der Formel:

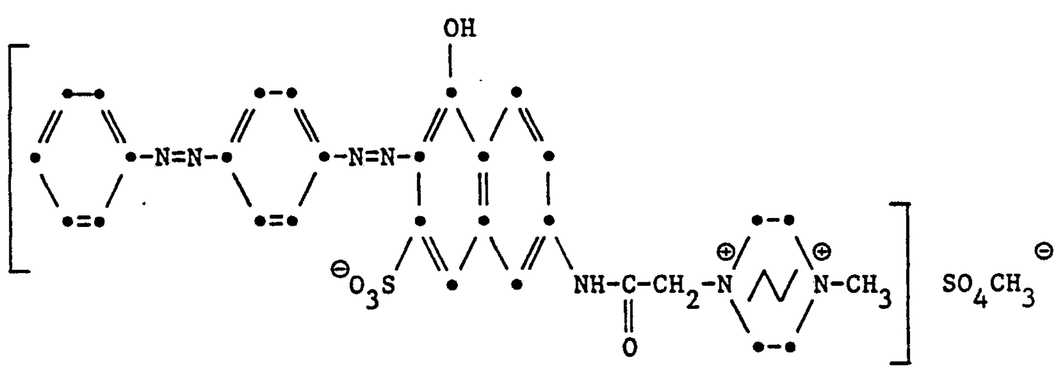

**Beispiel 11:**

Ersetzt man im Beispiel 9 die 12 T Triäthylendiamin durch entsprechende Teile Dipropylentriamin so erhält man den Farbstoff der Formel:

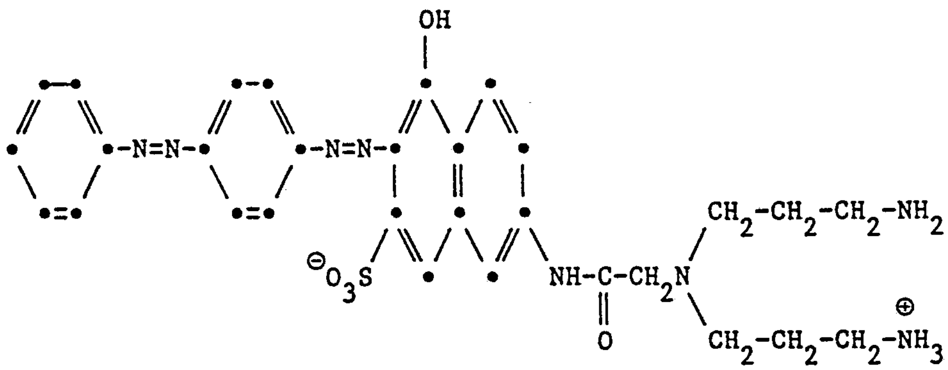

**Beispiel 12:**

Ersetzt man im Beispiel 9 die 12 T Triäthylendiamin durch entsprechende Teile Aminoäthylpiperazin, so erhält man den Farbstoff der Formel:

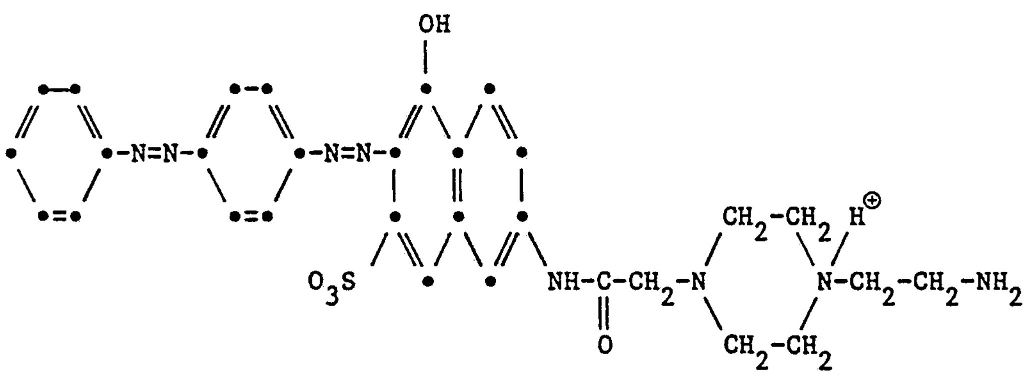

Analogerweise erhält man durch Einsatz der Diazokomponente der Formel

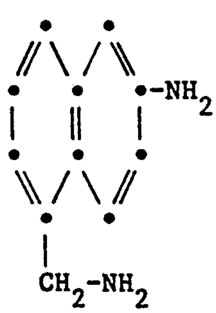

den Farbstoff der Formel:

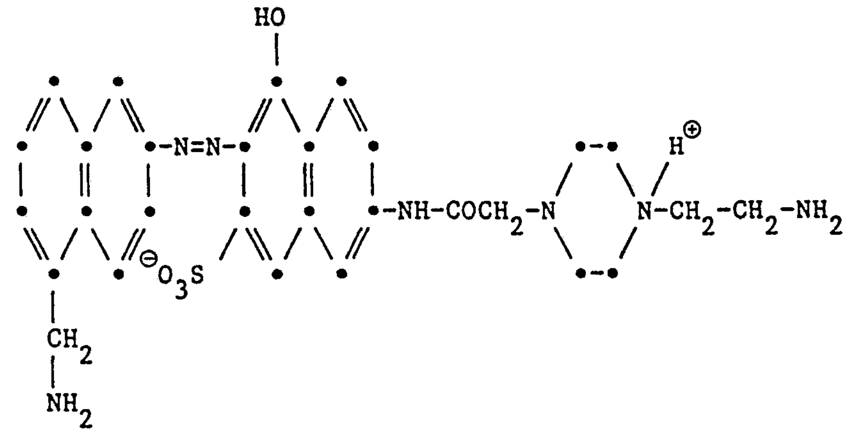

der Papier in brillanten orangen Tönen färbt.

**Beispiel 13:**

29,6 T 4-Aminoazobenzol werden gemäss Beispiel 1 diazotiert.

In einem zweiten Reaktionsgefäss wird eine Lösung von 62 T des Acylierungsproduktes von J-Säure mit Trifluorchlorpyrimidin in 500 ml Wasser vorgelegt und obige Diazolösung bei pH 6 - 7 zugetropft. Man lässt über Nacht ausrühren und versetzt mit 43 T 3-Diäthylaminopropylamin. Das Reaktionsgemisch wird auf 95° geheizt, bis die Dünnschichtchromatographie ein einheitliches Kondensationsprodukt zeigt. Man versetzt dann langsam mit 30-%-iger wässriger Natronlauge, so dass der pH auf 9 steigt. Der ausgefallene Farbstoff der Formel

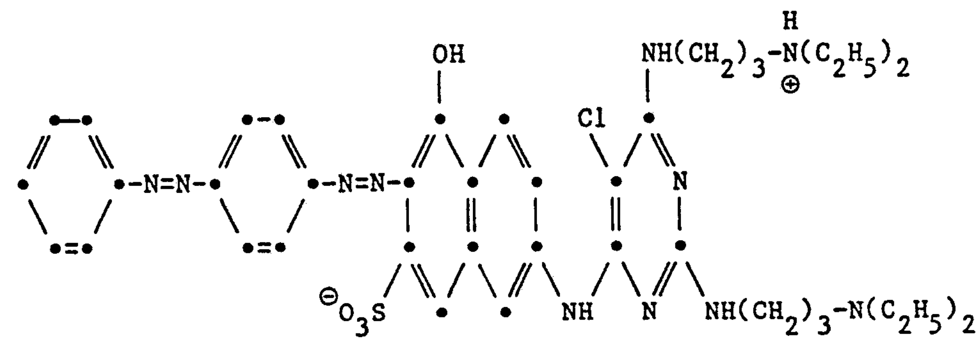

wird abgesaugt und getrocknet. Er ist in schwauch saurem bis saurem wässrigem Medium gut löslich und färbt Papier in blaustichig roten Tönen; das Abwasser ist farblos.

Ersetzt man im obigen Beispiel das 3-Diäthylaminopropylamin durch entsprechende Teile N-(2-Aminoäthyl)-piperazin, so erhält man den Farbstoff der Formel

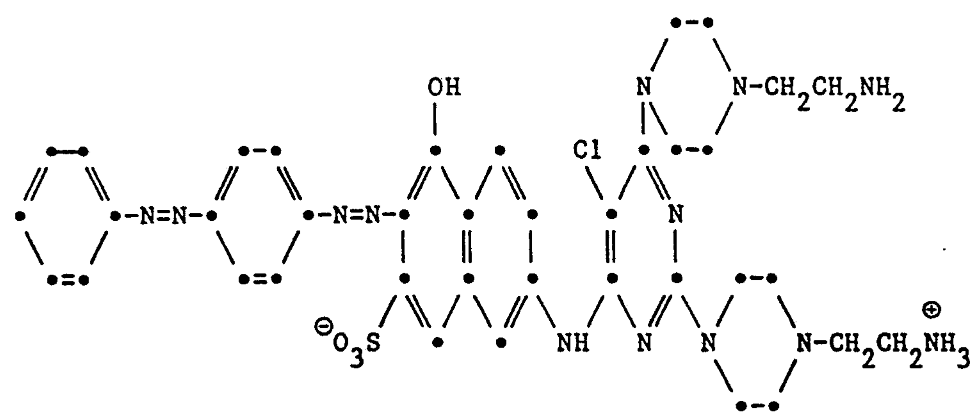

Er besitzt ebenfalls sehr gute färberische Eigenschaften auf Papier.

Als Variante dieses Herstellungsverfahrens kann man das Trifluorchlorpyrimidin durch äquivalente Teile Tetrachlorpyrimidin ersetzten; man erhält die selben Farbstoffe.

Gemäss dieser Arbeitsweise lassen sich weitere Diazoverbindungen analoger Strukturren herstellen, die in der folgenden Tabelle 2 zusammen mit deren Nuancen auf Papier angegeben sind.

Tabelle 2

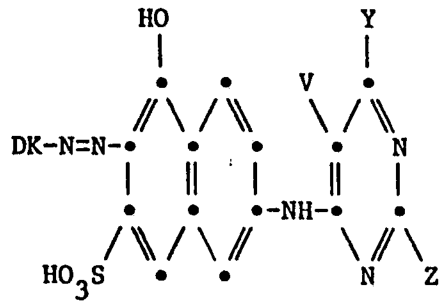

| Bsp. | DK | V | Y | Z | Nuance auf Papier |
|---|---|---|---|---|---|
| 14 | 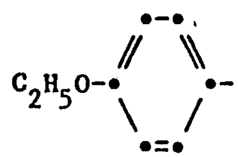 | Cl | $-NH(CH_2)_3N(C_2H_5)_2$ | $-NH(CH_2)_3N(C_2H_5)_2$ | gelbstichig rot |
| 15 | 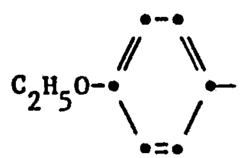 | Cl | 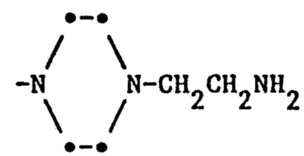 | 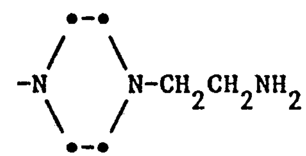 | gelbstichig rot |
| 16 | 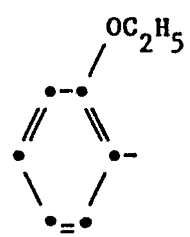 | Cl | 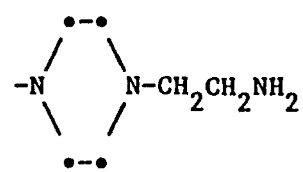 | 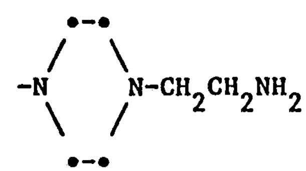 | gelbstichig rot |

**Tabelle 2** (Fortsetzung)

| Bsp. | DK | V | Y | Z | Nuance auf Papier |
|---|---|---|---|---|---|
| 17 | 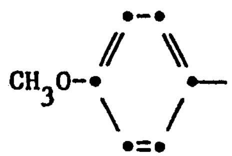 | Cl | 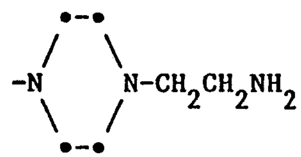 | 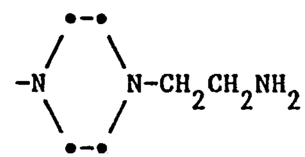 | gelbstichig rot |
| 18 | 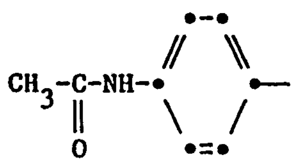 | Cl | 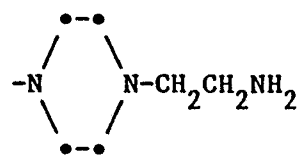 | 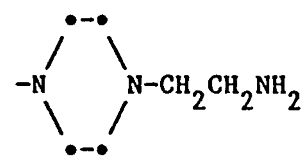 | gelbstichig rot |
| 19 | 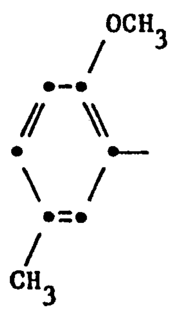 | Cl | 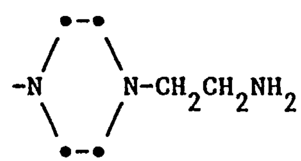 | 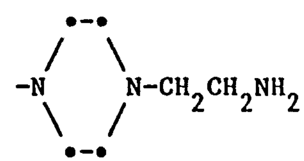 | gelbstichig rot |

**Tabelle 2** (Fortsetzung)

| Bsp. | DK | V | Y | Z | Nuance auf Papier |
|---|---|---|---|---|---|
| 20 | 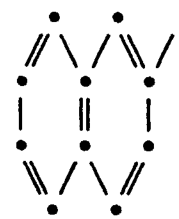 | Cl | 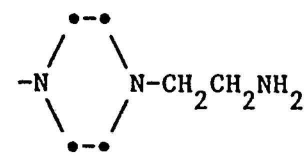 | 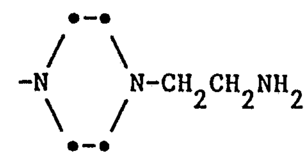 | gelbstichig rot |
| 21 | 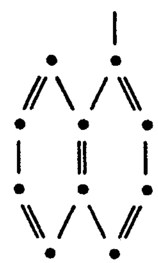 | Cl | 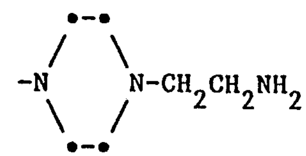 | 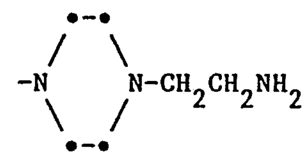 | blaustichig rot |
| 22 | 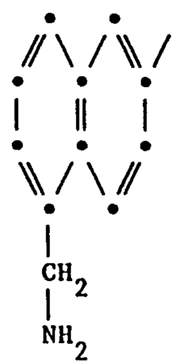 | Cl | 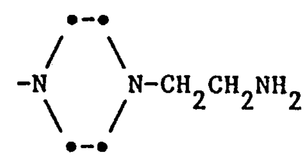 | 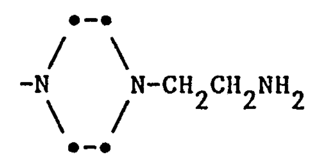 | gelbstichig rot |

**Tabelle 2** (Fortsetzung)

| Bsp. | DK | V | Y | Z | Nuance auf Papier |
|---|---|---|---|---|---|
| 23 | 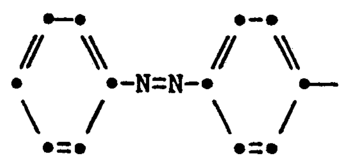 | H | 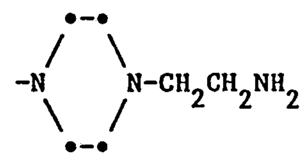 | 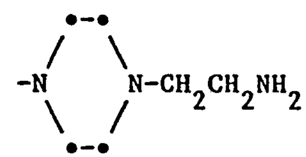 | gelbstichig rot |
| 24 | 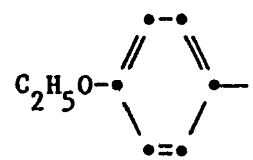 | H | 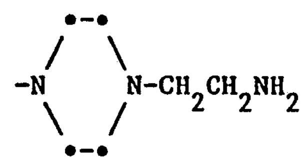 | 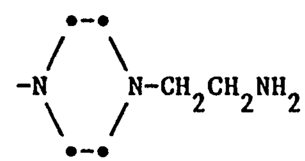 | gelbstichig rot |
| 25 | 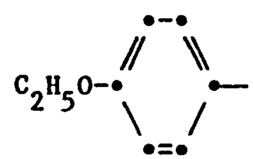 | H | $-NH-(CH_2)_3N(C_2H_5)_2$ | $-NH-(CH_2)_3N(C_2H_5)_2$ | gelbstichig rot |

**Beispiel 26:**

Es wird eine Papierbahn aus gebleichtem Buche-Sulfit (22° SR) auf einer kontinuierlich arbeitenden Labor-Papiermaschine hergestellt. Zehn Sekunden vor dem Stoffauflauf wird eine wässrige Lösung des Farbstoffes gemäss Beispiel 1 unter starker Turbulenz dem Dünnstoff kontinuierlich zudosiert (0,5-%-ige Färbung, Flottenverhältnis 1 : 400, Wasserhärte 10° dH, pH 6, Temperatur 20°).

Es entsteht auf der Papierbahn eine farbstarke Rotnuance von mittlerer Intensität. Das Abwasser ist völlig farblos.

**Beispiel 27:**

Man vermischt 50 Teile chemisch gebleichte Buche-Sulfit mit 50 Teilen gebleichtem RKN 15 (Mahlgrad 22° SR) und 2 Teile des Farbstoffes gemäss Beispiel 1 in Wasser (pH 6, Wasserhärte 10° dH, Temperatur 20°, Flottenverhältnis 1 : 40). Nach 15-minütigem Rühren werden Papierblätter auf einem Frank-Blattbildner hergestellt.

Das Papier ist in einer sehr intensiven Rotnuance gefärbt. Das Abwasser ist völlig farblos. Der Ausziehgrad erreicht praktisch 100 %. Die Nassechtheiten und Lichtechtheiten sind ausgezeichnet.

**Beispiel 28:**

10 Teile Baumwollgewebe (gebleichte mercerisierte Baumwolle) werden in einem Labor-Baumfärbeapparat in 200 Teile einer Flotte (Wasserhärte 10° dH, pH 4, 3 Umwälzungen der Färbeflotte pro Minute) die 0,05 Teile des Farbstoffes gemäss Beispiel 1 enthält gefärbt. Die Temperatur wird in 60 Minuten von 20° auf 100° aufgeheizt, dann während 15 Minuten konstant gehalten.

Die Färbeflotte ist völlig ausgezogen. Es entsteht auf dem Baumwollgewebe eine farbstarke rote Färbung, welche sich durch eine gute Lichtechtheit und eine sehr gute Nassechtheit auszeichnet.

Färbt man bei gleicher Arbeitsweise ein Textilgewebe aus Regenerat-Cellulose (Viskose), so erhält man auch auf diesem Material eine farbstarke rote Färbung, die eine gute Lichtechtheit und sehr gute Nassechtheit besitzt.

**Patentansprüche**

1. Azoverbindungen der Formel I

$$[F - A] - (B)_x \qquad (I),$$

worin bedeuten:

F den Rest einer sulfonsäuregruppenhaltigen Azoverbindung

A einen Rest der Formel

$-NR-CO-R_1-$, 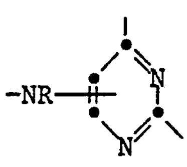 oder 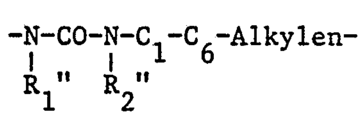 ,

worin bedeuten:

R Wasserstoff oder $C_1$-$C_4$-Alkyl,

$R_1$ einen unverzweigten oder verzweigten $C_1$-$C_6$-Alkylenrest, oder einen $C_2$-$C_6$-Vinylenrest,

$R_1''$ und $R_2''$ unabhängig voneinander Wasserstoff oder $C_1$-$C_4$-Alkyl, wobei im Falle von $R_2''$ die $C_1$-$C_4$-Alkylgruppe durch eine

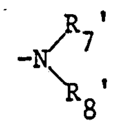

Gruppe substituiert sein kann,

worin $R_7'$ Wasserstoff, Alkyl ($C_1$-$C_4$), gegebenenfalls durch Hydroxyl, Phenyl oder Carbamoyl substituiert, Cyclohexyl gegebenenfalls durch 1 bis 3 Methylgruppen substituiert oder einen Phenylrest darstellt, und

$R_8'$ Wasserstoff, Alkyl ($C_1$-$C_4$) gegebenenfalls durch Hydroxyl, Phenyl oder Carbamoyl substituiert, bedeutet oder die Reste $R_7'$ und $R_8'$ bilden zusammen mit dem gemeinsamen N-Atom einen Pyrrolidin-, Piperidin-, Morpholin- oder Piperazinring,

B einen basischen oder kationischen Rest der Formel

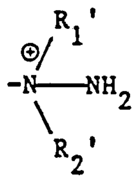 , 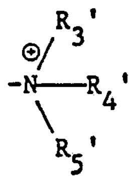 , 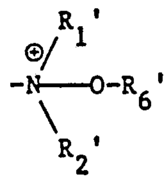 oder 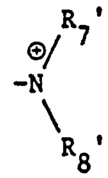

worin bedeutet:

$R_1'$ bis $R_4'$ unabhängig voneinander einen Alkylrest ($C_1$-$C_4$), der gegebenenfalls durch eine Hydroxylgruppe substituiert ist,

$R_5'$ und $R_6'$ unabhängig voneinander einen Alkylrest ($C_1$-$C_4$),

$R_7'$ Wasserstoff, Alkyl ($C_1$-$C_4$) gegebenenfalls durch Hydroxyl, Phenyl oder Carbamoyl substituiert, Cyclohexyl gegebenenfalls durch 1 bis 3 Methylgruppen substituiert oder einen Phenylrest,

$R_8'$ Wasserstoff, Alkyl ($C_1$-$C_4$) gegebenenfalls durch Hydroxyl, Phenyl, oder Carbamoyl substituiert, oder die Reste $R_1'$ und $R_2'$ oder die Reste $R_3'$ und $R_4'$ oder die Reste $R_7'$ und $R_8'$ bilden zusammen mit dem gemeinsamen N-Atom einen Pyrrolidin-, Piperidin-, Morpholin- oder Piperazinring und die Reste $R_3'$, $R_4'$ und $R_5'$ mit dem gemeinsamen N-Atom einen Pyridiniumring oder einen Rest der Formeln

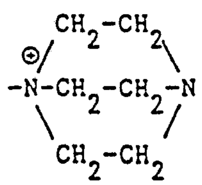 , oder 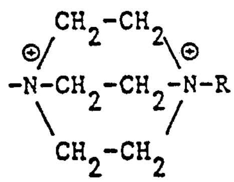

worin R Wasserstoff oder $C_1$-$C_4$-Alkyl bedeutet,

oder den Rest eines basischen Polyamins der Formel

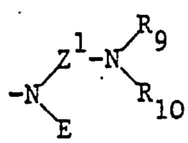

worin

$Z^1$ einen gegebenenfalls durch 1 bis 3 -O- oder -NH-Gruppen unterbrochenen Alkylrest mit 2 bis 12 C-Atomen,

$R_9$ und $R_{10}$ unabhängig voneinander jeweils Wasserstoff oder $C_1$-$C_8$-Alkyl, welches durch OH substituiert sein kann,

E Wasserstoff, $C_1$-$C_{18}$-Alkyl oder eine Gruppe der Formel

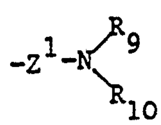

wobei $Z^1$, $R_9$ und $R_{10}$ die vorstehend genannten Bedeutungen aufweisen, oder

E und $R_{10}$ zusammen Ethylen bedeutet, falls $Z^1$ ebenfalls Ethylen ist, oder worin B den Rest eines kationischen Polyamins der Formel

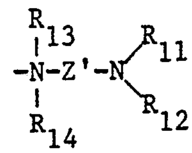

worin

Z' eine gegebenenfalls durch

$CH_3$
|
-N- unterbrochene Alkylenkette mit 2 bis 5 C-Atomen,

$R_{11}$ und $R_{12}$ Wasserstoff oder $C_1$-$C_4$-Alkyl,

$R_{13}$ $C_1$-$C_4$-Alkyl und

$R_{14}$ $C_1$-$C_4$-Alkyl oder $C_2$-$C_4$-Alkylen-$NH_2$ bedeutet und worin

x mindestens 1 ist, mit der Bedingung, dass im Molekül mehr Gruppen B vorhanden sind als Sulfonsäuregruppen.

2. Azoverbindung der Formel I gemäss Anspruch 1, dadurch gekennzeichnet, dass F den Rest einer sulfonsäuregruppenhaltigen Disazoverbindung bedeutet.

3. Azoverbindungen der Formel I gemäss Anspruch 1, dadurch gekennzeichnet, dass A einen Rest der Formel -NR-CO-$R_1$- bedeutet.

4. Azoverbindungen der Formel I gemäss Anspruch 1, dadurch gekennzeichnet, dass A einen Rest der Formel

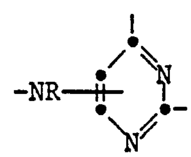

bedeutet.

5. Azoverbindungen der Formel I gemäss Anspruch 1, dadurch gekennzeichnet, dass A einen Rest der Formel

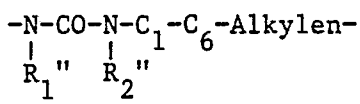

bedeutet.

6. Azoverbindungen der Formel I gemäss Anspruch 1, dadurch gekennzeichnet, dass x die Zahlen 1 oder 2 bedeutet.

7. Azoverbindungen der Formel I gemäss Anspruch 1, dadurch gekennzeichnet, dass x die Zahl 1 bedeutet.

8. Verfahren zur Herstellung von Azoverbindungen der Formel I gemäss Anspruch 1, dadurch gekennzeichnet, dass man, sofern A den Rest der Formeln

-NH-CO-$R_1$- oder 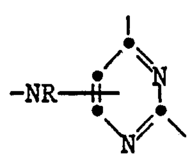

bedeutet, auf eine Kupplungskomponente ein diazotiertes Amin kuppelt, wobei in der Diazokomponente oder in der Kupplungskomponente bereits ein Rest A-Halogen vorliegt und die Verbindung F-A-Halogen mit einer den Rest B einführenden Verbindung $(H)_y$-B (y = 0, 1, 2) umsetzt und die erhaltene Verbindung gegebenenfalls quaterniert, oder sofern A den Rest der Formel

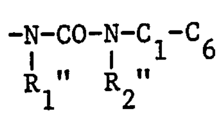

-Alkylen bedeutet,

a) eine Verbindung der Formel II

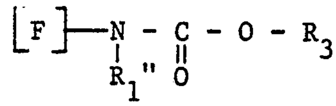

(II) ,

worin $R_1''$ und F die angegebene Bedeutung haben und $R_3$ unsubstituiertes Phenyl, Halogen substituiertes Phenyl, $C_1$-$C_4$-Alkyl substituiertes Phenyl, $C_1$-$C_4$-Alkoxy substituiertes Phenyl, $C_1$-$C_4$-Alkyl oder $C_1$-$C_4$-Alkylphenyl bedeutet, mit einer Verbindung der Formel III

H - B' - R (III),

worin R die angegebene Bedeutung hat und B' ein den Rest $(B)_x$ tragendes Brückenglied bedeutet, kondensiert, oder

b) eine Verbindung der Formel VIII

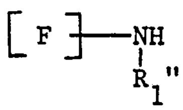

(VIII)

mit einer Verbindung der Formel III in Gegenwart von Phosgen umsetzt, wobei die Symbole F und $R_1''$ die angegebene Bedeutung haben, oder indem man

c) eine Verbindung der Formel VIII

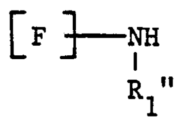

(VIII)

mit einer Verbindung der Formel IX

Cl-CO-B'-R (IX)

bzw. $R_3$OCO-B'-R (IXa)

worin F, $R_1''$, $R_3$, B' und R die angegebene Bedeutung haben, kondensiert.

9. Verwendung der Azoverbindungen der Formel I gemäss Anspruch 1 zum Färben und Bedrucken von Textilmaterialien, Papier, Leder und zur Bereitung von Tinten.

10. Verwendung der Azoverbindungen der Formel I gemäss Anspruch 1 zum Färben und Bedrucken von natürlichen und regenerierten Cellulosematerialien, vor allem Baumwolle und Viscose.

11. Verwendung der Azoverbindungen der Formel I gemäss Anspruch 1 zum Färben und Bedrucken von Papier aller Arten, vor allem von gebleichtem, ungeleimtem ligninfreiem Papier.

12. Verwendung der Azoverbindungen der Formel I gemäss Anspruch 1 zum Färben und Bedrucken von Polyacrylnitrilmaterialien.

13. Die mit den Azoverbindungen der Formel I gemäss Anspruch 1 behandelten bzw. gefärbten und bedruckten Materialien.

## Claims

1. An azo compound of the formula I

$$[F - A]-(B)_x \qquad (I)$$

in which F is the radical of an azo compound containing sulfonic acid groups, A is a radical of the formula

$-NR-CO-R_1-$, 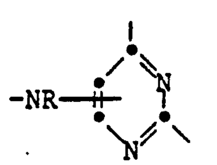 or 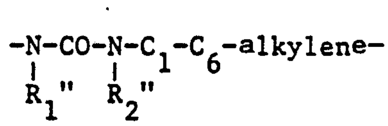

in which

R is hydrogen or $C_1$-$C_4$alkyl,

$R_1$ is a linear or branched $C_1$-$C_6$alkylene radical or a $C_2$-$C_6$vinylene radical,

$R_1''$ and $R_2''$ independently of one another are hydrogen or $C_1$-$C_4$alkyl, it being possible, in the case of $R_2''$ for the $C_1$-$C_4$alkyl group to be substituted by an

group in which

$R_7'$ is hydrogen or alkyl($C_1$-$C_4$) which is unsubstituted or substituted by hydroxyl, phenyl or carbamoyl, or is cyclohexyl which is unsubstituted or substituted by 1 to 3 methyl groups, or is a phenyl radical, and

$R_8'$ is hydrogen or alkyl($C_1$-$C_4$) which is unsubstituted or substituted by hydroxyl, phenyl or carbamoyl, or the radicals $R_7'$ and $R_8'$, together with the common N atom, form a pyrrolidine, piperidine, morpholine or piperazine ring, B is a basic or cationic radical of the formula

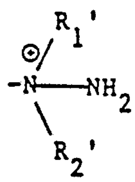, 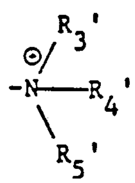, 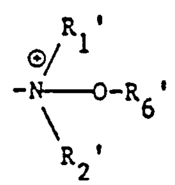 or 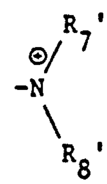

in which

$R_1'$ to $R_4'$ independently of one another are an alkyl radical ($C_1$-$C_4$), which is unsubstituted or substituted by a hydroxyl group,

$R_5'$ and $R_6'$ independently of one another are an alkyl radical ($C_1$-$C_4$),

$R_7'$ is hydrogen, alkyl ($C_1$-C4), which is unsubstituted or substituted by hydroxyl, phenyl or carbamoyl, cyclohexyl, which is unsubstituted or substituted by 1 to 3 methyl groups, or a phenyl radical,

$R_8'$ is hydrogen, alkyl ($C_1$-$C_4$), which is unsubstituted or substituted by hydroxyl, phenyl or carbamoyl, or the radicals $R_1'$ and $R_2'$ or the radicals $R_3'$ and $R_4'$ or the radicals $R_7'$ and $R_8'$ form, together with the common N atom, a pyrrolidine, piperidine, morpholine or piperazine ring and the radicals $R_3'$ $R_4'$ and $R_5'$ with the common N atom, form a pyridinium ring or a radical of the formulae

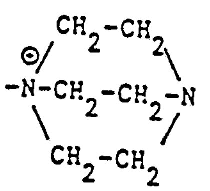 or 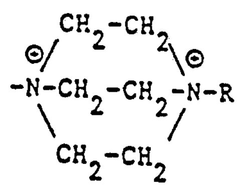

in which R is hydrogen or $C_1$-$C_4$alkyl, or the radical of a basic polyamine of the formula

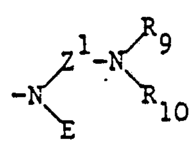

in which

$Z^1$ is an alkyl radical with 2 to 12 C atoms which can be interrupted by 1 to 3 -O- or -H- groups,

$R_9$ and $R_{10}$ independently of one another are each hydrogen, or $C_1$-$C_8$alkyl, which can be substituted by OH,

E is hydrogen, $C_1$-$C_{18}$alkyl or a group of the formula

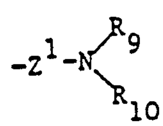

in which $Z^1$, $R_9$ and $R_{10}$ have the abovementioned meanings, or E and $R_{10}$ together are ethylene, if $Z^1$ is likewise ethylene, or in which B is the radical of a cationic polyamine of the formula

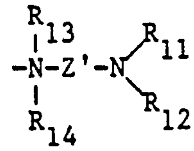

in which

Z' is an alkylene chain with 2 to 5 C atoms, which can be interrupted by

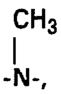

$R_{11}$ and $R_{12}$ are hydrogen or $C_1$-$C_4$-alkyl,

$R_{13}$ is $C_1$-$C_4$alkyl and

$R_{14}$ is $C_1$-$C_4$alkyl or $C_2$-$C_4$alkylene-$NH_2$ and in which

x is at least 1 with the proviso that the molecule contains more B groups than sulfonic acid groups.

2. An azo compound of the formula I, according to claim 1, wherein F is the radical of a disazo compound containing sulfonic acid groups.

3. An azo compound of the formula I, according to claim 1, wherein A is a radical of the formula -NR-CO-$R_1$-.

4. An azo compound of the formula I, according to claim 1, wherein A is a radical of the formula

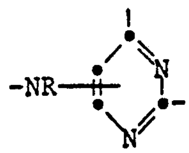

5. An azo compound of the formula I, according to claim 1, wherein A is a radical of the formula

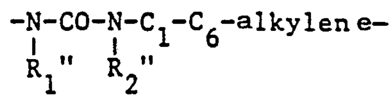

6. An azo compound of the formula I, according to claim 1, wherein x is the numbers 1 or 2.

7. An azo compound of the formula I, according to claim 1, wherein x is the number 1.

8. A process for the preparation of an azo compound of the formula according to claim 1, which comprises, if A is the radical of the formulae -NH-CO-$R_1$- or

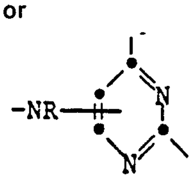,

coupling a diazotised amine with a coupling component, a radical A-halogen being already present in the diazo component or in the coupling component, and reacting the compound F-A-halogen with a compound $(H)_y$-B (y = 0, 1 or 2) which introduces the radical B, and, if desired, quaternising the resulting compound, or, if A is a radical of the formula

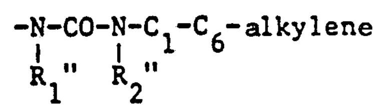

a) subjecting a compound of the formula II

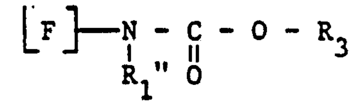 (II)

in which $R_1''$ and F are as defined and $R_3$ is unsubstituted phenyl, halogen-substituted phenyl, $C_1$-$C_4$alkyl-substituted phenyl, $C_1$-$C_4$alkoxy-substituted phenyl, $C_1$-$C_4$alkyl or $C_1$-$C_4$alkylphenyl to a condensation reaction with a compound of the formula III

H-B'-R (III)

in which R is as defined and B' is a bridge member carrying the radical $(B)_x$ or

b) reacting a compound of the formula VIII

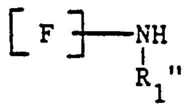

(VIII)

with a compound of the formula III in the presence of phosgene, the symbols F and $R_1''$ being as defined, or

c) subjecting a compound of the formula VIII

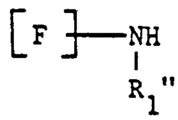

(VIII)

to a condensation reaction with a compound of the formula IX

Cl-CO-B'-R (IX)

or $R_3$OCO-B'-R (IXa)

in which F, $R_1''$, $R_3$ B' and R are as defined.

9. The use of the azo compound of the formula I, according to claim 1, for dyeing and printing textile materials, paper and leather and for preparing inks.

10. The use of the azo compound of the formula I, according to claim 1 for dyeing and printing natural and regenerated cellulose materials, in particular cotton and viscose.

11. The use of the azo compound of the formula I, according to claim 1, for dyeing and printing paper of all types, especially bleached, unsized, lignin-free paper.

12. The use of the azo compound of the formula I, according to claim 1, for dyeing and printing polyacrylonitrile materials.

13. The materials which have been treated or dyed and printed with the azo compounds of the formula I according to claim 1.

**Revendications**

1. Composés azoïques de formule I

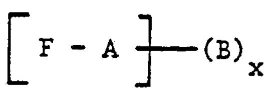

(I),

dans laquelle

F représente le résidu, d'un composé azoïque comportant des groupes acide sulfonique

A représente un groupe de formule

$-NR-CO-R_1-$, 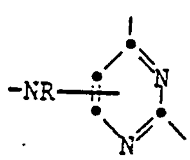 ou 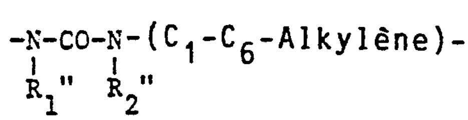

dans lesquelles

R représente un hydrogène ou un groupe alkyle en $C_1$-$C_4$,

$R_1$ représente un groupe alkylène en $C_1$-$C_6$ ramifié ou non ramifié, ou un groupe vinylène en $C_2$-$C_6$

$R_1''$ et $R_2''$ représentent, indépendamment l'un de l'autre, un hydrogène ou un groupe alkyle en $C_1$-$C_4$, le groupe alkyle en $C_1$-$C_4$ pouvant, dans le cas de $R_2''$, être substitué par un groupe -N<,

où $R_7'$ représente un hydrogène, un groupe alkyle en ($C_1$-$C_4$) éventuellement substitué par un hydroxyle, phényle ou carbamoyle, un groupe cyclohexyle éventuellement substitué par 1 à 3 groupes méthyle, ou un

groupe phényle, et $R_8'$ représente un hydrogène, un groupe alkyle en ($C_1$-$C_4$) éventuellement substitué par un hydroxyle, phényle ou carbamoyle,ou bien les groupes

$R_7'$ et $R_8'$ forment ensemble, avec l'atome N commun, un cycle pyrrolidine, pipéridine, morpholine ou piperazine,

B représente un groupe basique ou cationique de formule

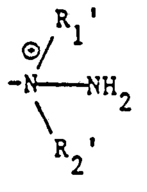 , 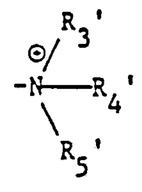 , 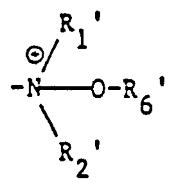 ou 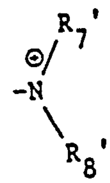

dans lesquelles

$R_1'$ à $R_4'$ représentent, indépendamment les uns des autres, un groupe alkyle en ($C_1$-$C_4$) éventuellement substitué par un groupe hydroxyle, $R_5'$ et $R_6'$ représentent, indépendamment l'un de l'autre, un groupe alkyle en ($C_1$-$C_4$),

$R_7'$ représente un hydrogène, un groupe alkyle en ($C_1$-$C_4$) éventuellement substitué par un hydroxyle, phényle ou carbamoyle, un groupe cyclohexyle éventuellement substitué par 1 à 3 groupes méthyle, ou un groupe phényle,

$R_8'$ représente un hydrogène, un groupe alkyle en ($C_1$-$C_4$) éventuellement substitué par un hydroxyle, phényle ou carbamoyle, ou bien les groupes $R_1'$ et $R_2'$, ou les groupes $R_3'$ et $R_4'$, ou les groupes $R_7'$ et $R_8'$ forment ensemble, avec l'atome N commun, un cycle pyrrolidine, pipéridine, morpholine ou pipérazine, ou les groupes $R_3'$, $R_4'$ et $R_5'$ représentent, avec l'atome N commun, un cycle pyridinium ou un groupe de formule

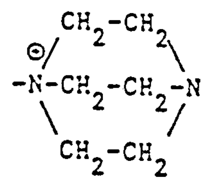 , ou 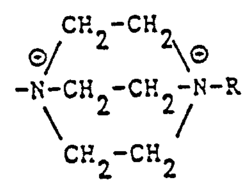

dans lesquelles R représente un hydrogène ou un groupe alkyle en $C_1$-$C_4$, ou un reste d'une polyamine basique de formule

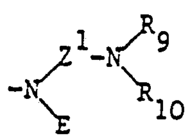

dans laquelle

$Z^1$ représente un groupe alkyle ayant 2 à 12 atomes de C, dans lequel sont éventuellement insérés 1 à 3 groupes -O- ou -NH-,

$R_9$ et $R_{10}$ représentent, indépendamment l'un de l'autre, chacun un hydrogène ou un groupe alkyle en $C_1$-$C_8$, qui peut être substitué par OH,

E représente un hydrogène, un groupe alkyle en $C_1$-$C_{18}$, ou un groupe de formule

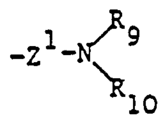

dans laquelle $Z^1$, $R_9$ et $R_{10}$ ont la même signification que plus haut, ou

E et $R_{10}$ représentent ensemble l'éthylène, dans le cas où $Z^1$ représente également l'éthylène,

ou bien où B représente une polyamine cationique de formule

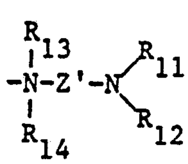

dans laquelle

Z' représente une chaîne alkylène ayant 2 à 5 atomes de C, éventuellement interrompue par

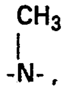

$R_{11}$ et $R_{12}$ représentent un hydrogène ou un groupe alkyle en $C_1$-$C_4$, $R_{13}$ représente un groupe alkyle en $C_1$-$C_4$, et $R_{14}$ représente un groupe alkyle en $C_1$-$C_4$ ou un groupe alkylène-$NH_2$ en $C_2$-$C_4$ et où

x vaut au moins 1, avec la condition que dans la molécule, il y ait plus de groupes B que de groupes acide sulfonique.

2. Composé azoïque de formule I selon la revendication 1, caractérisé en ce que F représente le reste d'un composé disazoïque comportant des groupes acide sulfonique.

3. Composés azoïques de formule I selon la revendication 1, caractérisés en ce que A représente un reste de formule -NR-CO-$R_1$-.

4. Composés azoïques de formule I selon la revendication 1, caractérisés en ce que A représente un reste de formule

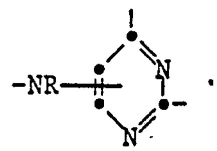

5. Composés azoïques de formule I selon la revendication 1, caractérisés en ce que A représente un reste de formule

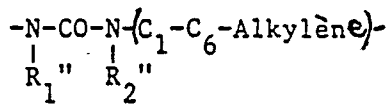

6. Composés azoïques de formule I selon la revendication 1, caractérisés en ce que x représente le chiffre 1 ou 2.

7. Composés azoïques de formule I selon la revendication 1, caractérisés en ce que x représente le chiffre 1.

8. Procédé pour la préparation des composés azoïques de formule I selon la revendication 1, caractérisé en ce que, dans la mesure où A représente le reste de formule

-NR-CO-$R_1$- ou 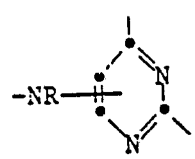

on copule une amine diazotée sur un composant de copulation, un reste A - halogène étant déjà présent dans le composant diazo ou dans le composant de copulation, et on fait réagir le composé F-A-halogène sur un composé $(H)_y$-B (y = 0, 1, 2) introduisant le reste B et l'on quaternise éventuellement le composé obtenu, ou, dans la mesure où A représente le reste de formule

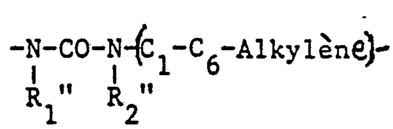

a) on condense un composé de formule II

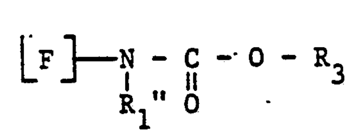

où $R_1''$ et F ont la signification mentionnée et $R_3$ représente un phényle non substitué, un phényle substitué par un halogène, un phényle substitué par un groupe alkyle en $C_1$-$C_4$, un phényle, alkyle en $C_1$-$C_4$ ou (alkyle en $C_1$-$C_4$)-phényle, substitué par un groupe alcoxy en $C_1$-$C_4$, avec un composé de formule III

H - B'- R (III),

où R a la signification mentionnée et B' représente un chaînon pontant portant un reste $(B)_x$, ou

b) on fait réagir un composé de formule VIII

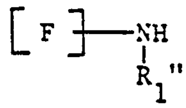

(VIII)

avec un composé de formule III en présence de phosgène, les symboles F et $R_1''$ ayant la signification mentionnée, ou

c) on condense un composé de formule VIII

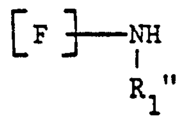

(VIII)

avec un composé de formule IX

Cl-CO-B'-R (IX)

ou $R_3$OCO-B'-R (IXa)

où F, $R_1''$, $R_3$, B' et R ont la signification mentionnée.

9. Utilisation des composés azoïques de formule I selon la revendication 1, pour la teinture et l'impression de matières textiles, de papier, de cuir et pour la préparation d'encres.

10. Utilisation des composés azoïques de formule I selon la revendication 1, pour la teinture et l'impression de matières cellulosiques naturelles et régénérées, surtout le coton et la viscose.

11. Utilisation des composés azoïques de formule I selon la revendication 1, pour la teinture et l'impression de papiers de toutes sortes, surtout du papier exempt de lignine, non encollé, blanchi.

12. Utilisation des composés azoïques de formule I selon la revendication 1, pour la teinture et l'impression de polyacrylonitriles.

13. Matières traitées ou teintées et imprimées avec les composés azoïques de formule I selon la revendication 1.